# EUROPEAN PATENT APPLICATION

(11) **EP 3 751 883 A1**
(43) Date of publication of application: **16.12.2020**
(21) Application number: 19761584.2
(22) Date of filing: 13.02.2019
(51) Int. Cl.: H04W 16/32, H04W 28/16, H04W 36/04, H04W 84/12, H04W 88/12, H04W 92/12

(54) **WIRELESS COMMUNICATION DEVICE AND METHOD**

(30) Priority: 27.02.2018 JP 2018032831
(71) Applicant: Sony Corporation, 108-0075 Tokyo (JP)
(72) Inventor: TANAKA, Yusuke, Tokyo 108-0075 (JP); AIO, Kosuke, Tokyo 108-0075 (JP); HIRATA, Ryuichi, Tokyo 108-0075 (JP)
(74) Representative: D Young & Co LLP
(86) International application number: PCT/JP2019/004934
(87) International publication number: WO 2019/167609

(57) **Abstract**

The present technique relates to a wireless communication apparatus and method enabling more efficient communication.

A wireless communication apparatus controls a second network including a plurality of first networks, each of the first networks including an access point and one or more wireless communication terminals. The wireless communication apparatus includes a control section configured to generate, on the basis of communication information related to communication in a predetermined one of the first networks, control information for controlling communication in another of the first networks and a communication section configured to transmit a frame including the control information and an identifier indicating that the frame has been transmitted from the second network controlled by the wireless communication apparatus. The present technique is applicable to a control base station, a base station, a slave terminal, and the like.

## Description

### [Technical Field]

The present technique relates to a wireless communication apparatus and method, and in particular, to a wireless communication apparatus and method enabled to communicate more efficiently.

### [Background Art]

In wireless LAN (Local Area Network), frequency resources not only in a 2.4-GHz/5-GHz band used in the related art but also in a higher frequency band, that is, a frequency band of 6 GHz or 60 GHz have become available.

Typically, low frequency bands are characterized by a wide coverage (communicable range) on one hand and a narrow bandwidth that can be provided on the other hand. The narrow bandwidth that can be provided leads to a small amount of information that can be communicated, that is, a small communication capacity. In contrast, high frequency bands are characterized by a wide band that can be provided on one hand and a narrow coverage on the other hand.

Thus, both the communication capacity and the coverage are assumed to be provided by using a network including a large number of small networks that use high frequency bands and a control base station integrating and controlling the networks through communication at low frequency bands.

Additionally, as a technique mainly intended for a cellular system, a technique has been proposed in which a control base station connecting to a plurality of base stations and wireless terminals collects wireless frequency information related to communication between each of the base stations and each of the wireless terminals to determine an operation frequency for each wireless terminal and uses a control signal to notify each wireless terminal of the operation frequency (see, for example, PTL 1).

### [Citation List]

### [Patent Literature]

[PTL 1] Japanese Patent Laid-Open No. 2016-116086

### [Summary]

### [Technical Problems]

However, the above-described technique fails to perform more efficient communication.

For example, known wireless LANs do not assume construction of a network including a plurality of small networks, and in particular, known base stations fail to perform the operation of the control base station in which the control base station connects to a plurality of base stations but itself does not perform data transmission.

Additionally, the technique described in PTL 1 mainly assumes a cellular system and fails to be applied directly to wireless LANs.

That is, given a system in which a control base station is present in a wireless LAN, a space reclamation technique is available in which interference control is performed to allow a plurality of communications using the same frequency. Thus, direct use of the method described in PTL 1 leads to insufficient information for realizing optimum space reclamation, precluding efficient communication effectively utilizing resources.

In view of such circumstances, an object of the present technique is to enable more efficient communication.

### [Solution to Problems]

A wireless communication apparatus according to a first aspect of the present technique is a wireless communication apparatus that controls a second network including a plurality of first networks, each of the first networks including an access point and one or more wireless communication terminals. The wireless communication apparatus includes a control section configured to generate, on the basis of communication information related to communication in a predetermined one of the first networks, control information for controlling communication in another of the first networks and a communication section configured to transmit a frame including the control information and an identifier indicating that the frame has been transmitted from the second network controlled by the wireless communication apparatus.

A wireless communication method according to the first aspect of the present technique is a wireless communication method corresponding to the wireless communication apparatus according to the first aspect of the present technique.

In the first aspect of the present technique, in the wireless communication apparatus that controls the second network including the plurality of first networks, each of the first networks includes the access point and the one or more wireless communication terminals, and on the basis of the communication information related to the communication in the predetermined one of the first networks, the control information for controlling communication in the other of the first networks is generated, and the frame is transmitted that includes the control information and the identifier indicating that the frame has been transmitted from the second network controlled by the wireless communication apparatus.

A wireless communication apparatus according to a second aspect of the present technique is a wireless communication apparatus belonging to a first network including an access point and one or more wireless communication terminals. The wireless communication apparatus includes a control section configured to control transmission of a frame including communication information related to communication in the first network to which the wireless communication apparatus belongs, to a master access point that controls a second network including a plurality of the first networks, or control communication in the first network on the basis of control information included in a frame received from the master access point, the control information being generated on the basis of the communication information in another of the first networks different from the first network to which the wireless communication apparatus belongs.

A wireless communication method according to the second aspect of the present technique is a wireless communication method corresponding to the wireless communication apparatus according to the second aspect of the present technique.

In the second aspect of the present technique, in the wireless communication apparatus belonging to the first network including the access point and the one or more wireless communication terminals, transmission of the frame including the communication information related to the communication in the first network to which the wireless communication apparatus belongs to the master access point that controls the second network including the plurality of the first networks is controlled, or communication in the first network is controlled on the basis of the control information included in the frame received from the master access point, the control information being generated on the basis of the communication information in the other of the first networks different from the first network to which the wireless communication apparatus belongs.

### [Advantageous Effect of Invention]

According to the first aspect and the second aspect of the present technique, more efficient communication can be performed.

Note that the effect described here is not necessarily limitative, and any of the effects described in the present disclosure may be provided.

### [Brief Description of Drawings]

[FIG. 1]

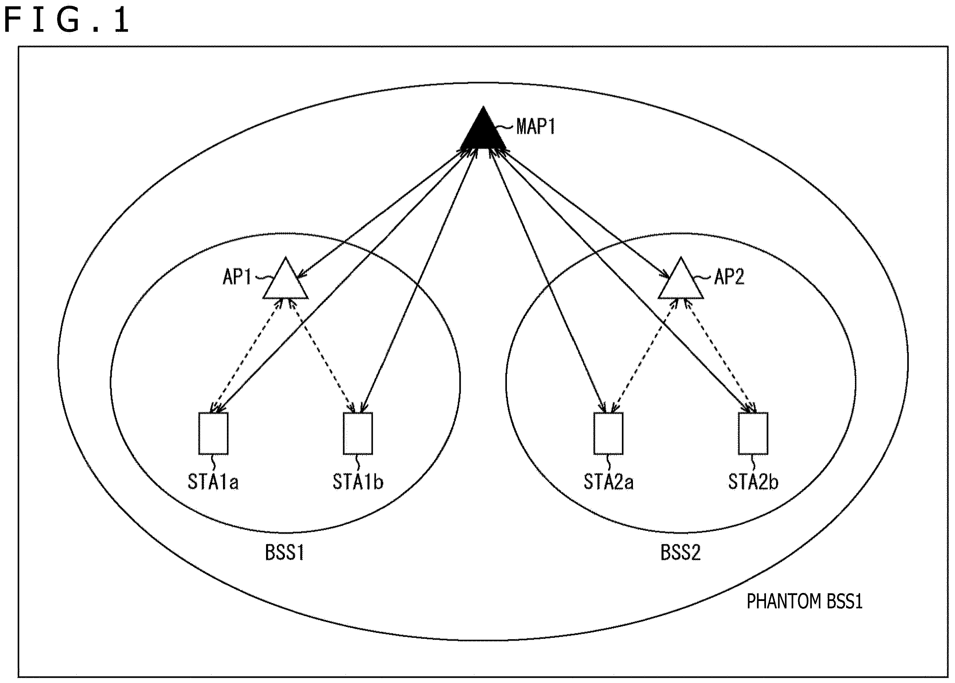

   FIG. 1 is a diagram illustrating a configuration example of a wireless communication system.
[FIG. 2]

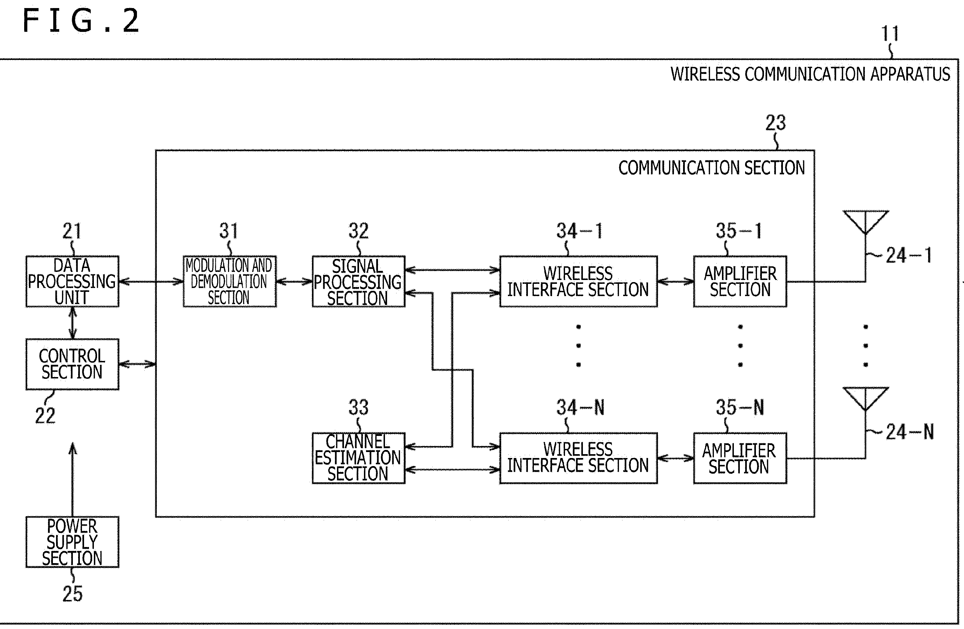

   FIG. 2 is a diagram illustrating a configuration example of a wireless communication apparatus.
[FIG. 3]

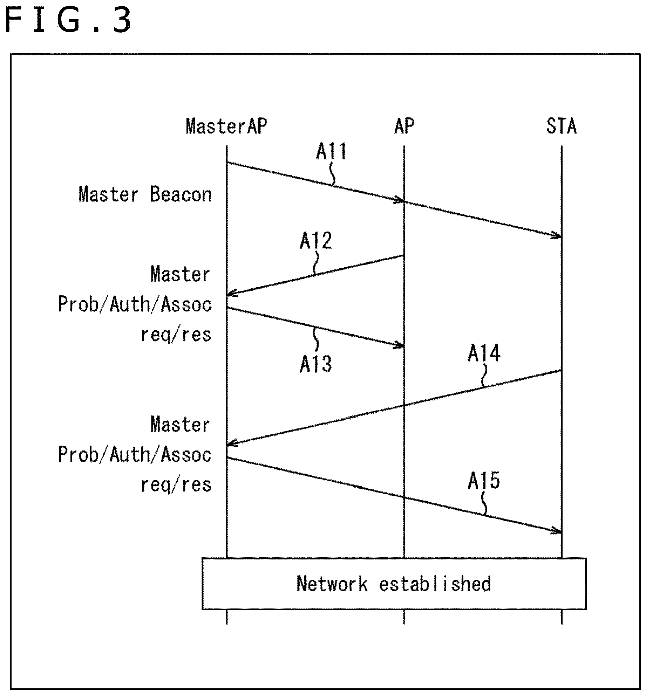

   FIG. 3 is a diagram illustrating construction of a phantom BSS.
[FIG. 4]

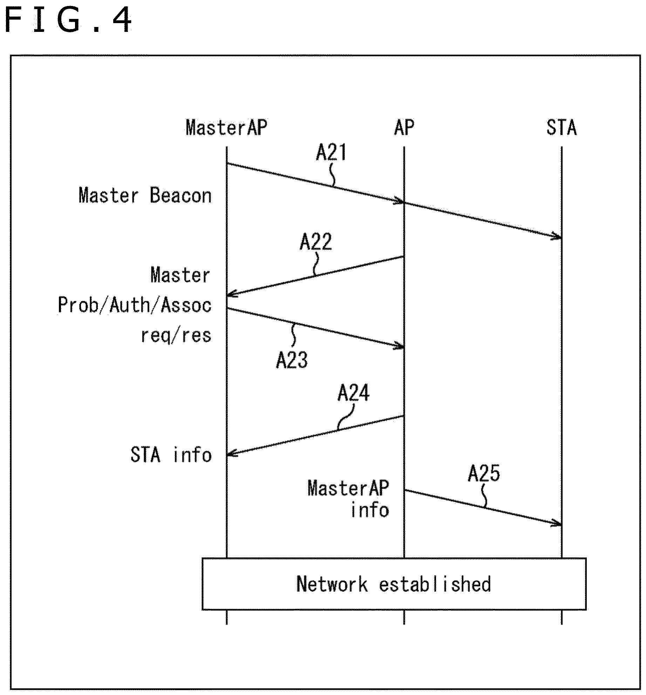

   FIG. 4 is a diagram illustrating the construction of the phantom BSS.
[FIG. 5]

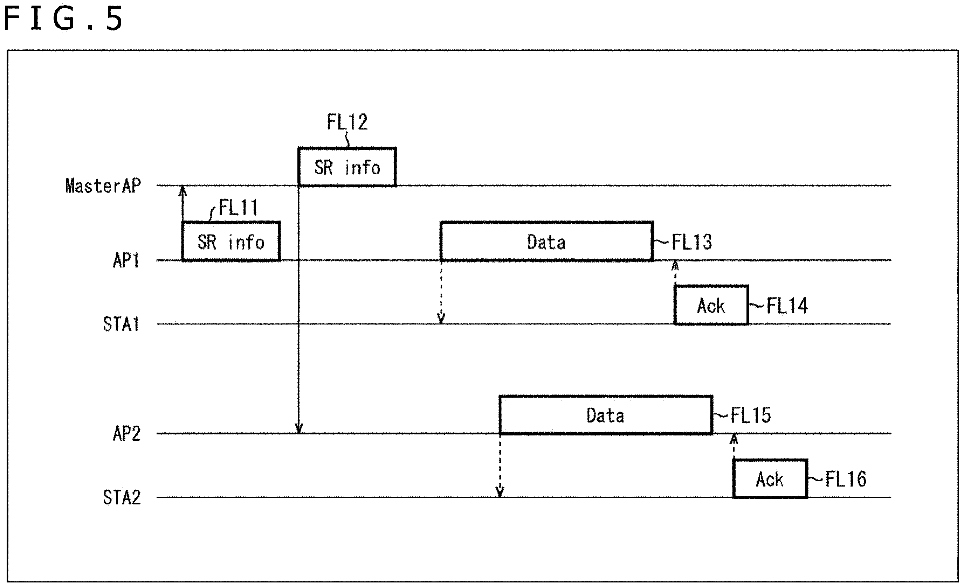

   FIG. 5 is a diagram illustrating communication control by a control base station.
[FIG. 6]

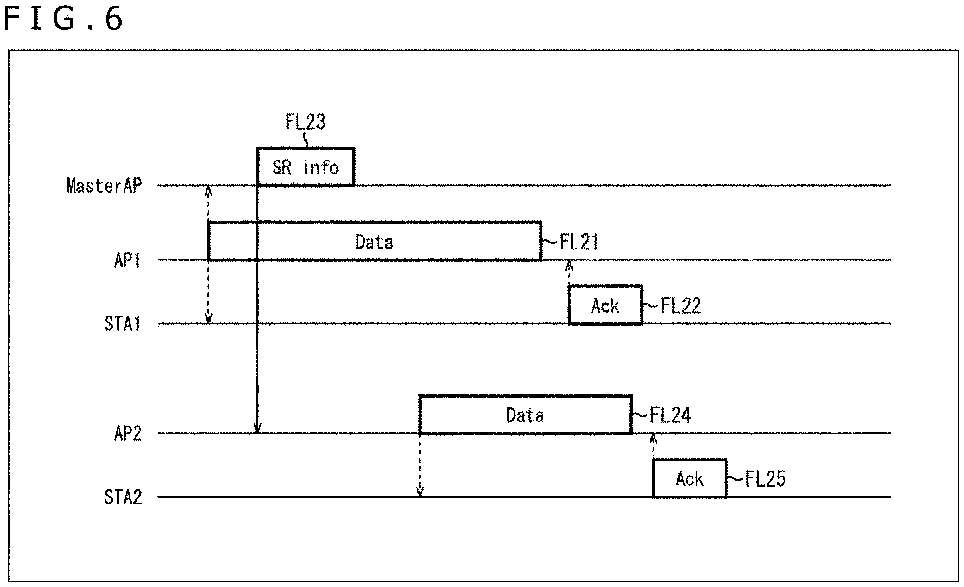

   FIG. 6 is a diagram illustrating the communication control by the control base station.
[FIG. 7]

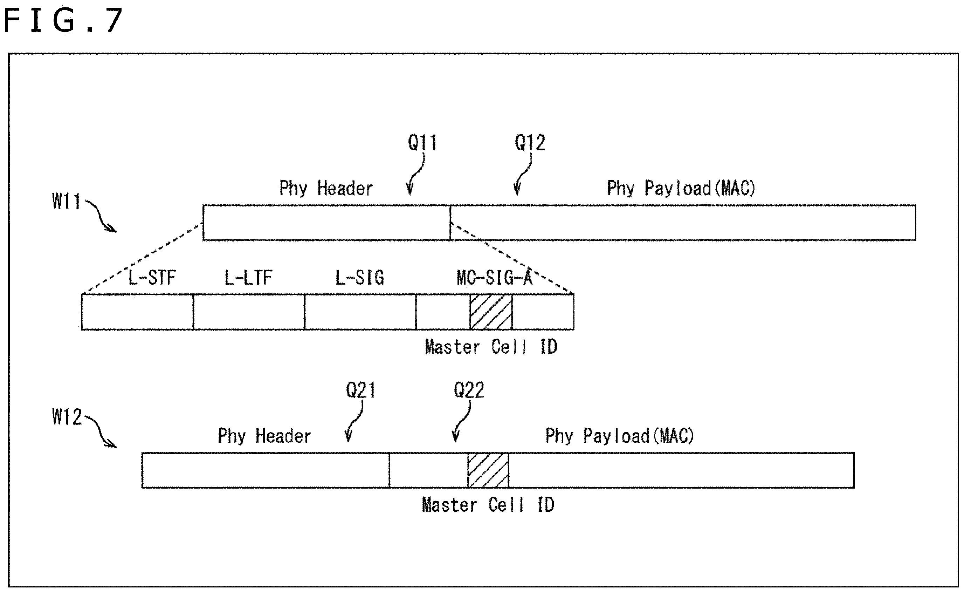

   FIG. 7 is a diagram illustrating an example of a frame format used in communication in the phantom BSS.
[FIG. 8]

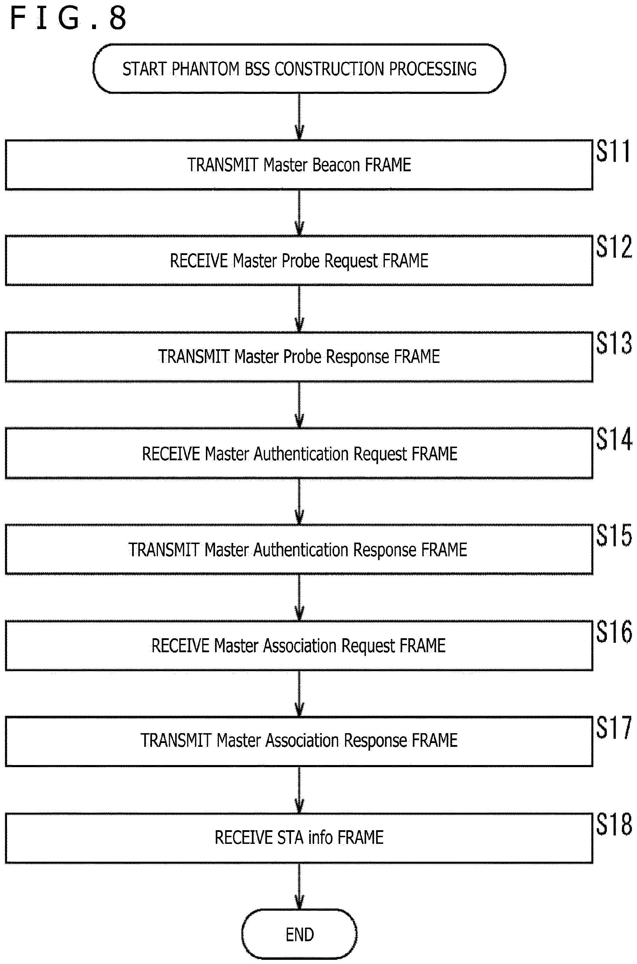

   FIG. 8 is a flowchart illustrating phantom BSS construction processing.
[FIG. 9]

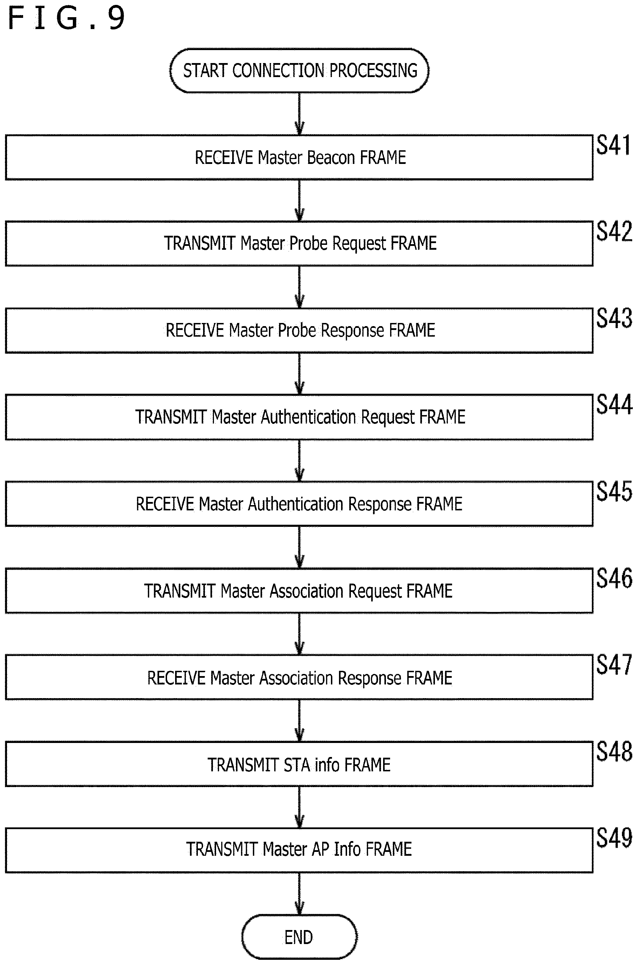

   FIG. 9 is a flowchart illustrating connection processing.
[FIG. 10]

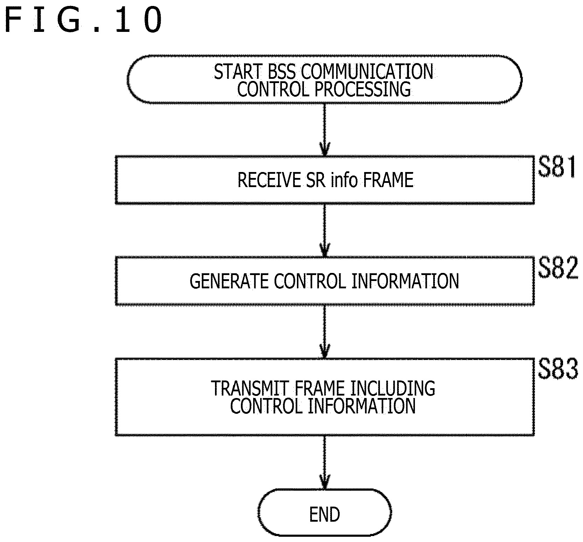

   FIG. 10 is a flowchart illustrating BSS communication control processing.
[FIG. 11]

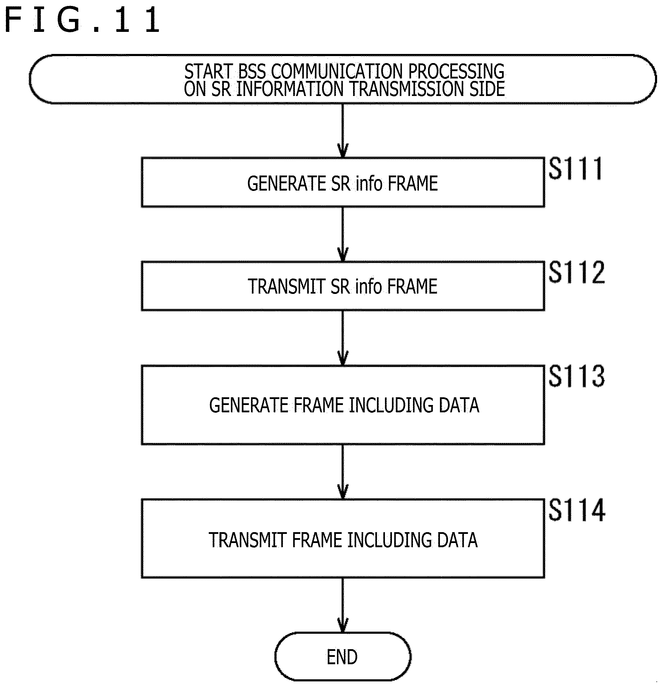

   FIG. 11 is a flowchart illustrating BSS communication processing on an SR information transmission side.
[FIG. 12]

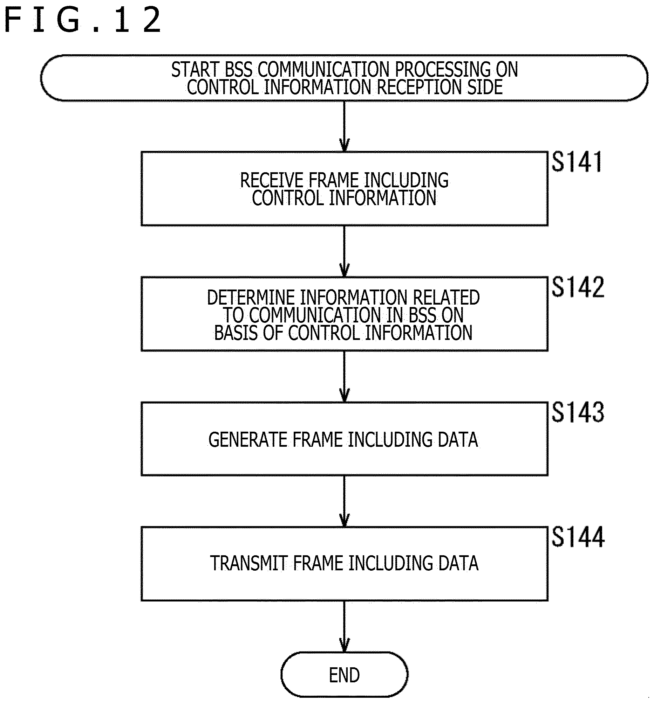

   FIG. 12 is a flowchart illustrating BSS communication processing on a control information reception side.
[FIG. 13]

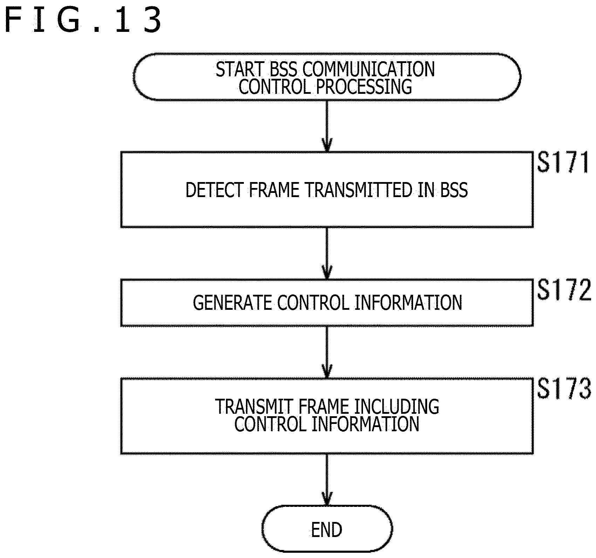

   FIG. 13 is a flowchart illustrating BSS communication control processing.
[FIG. 14]

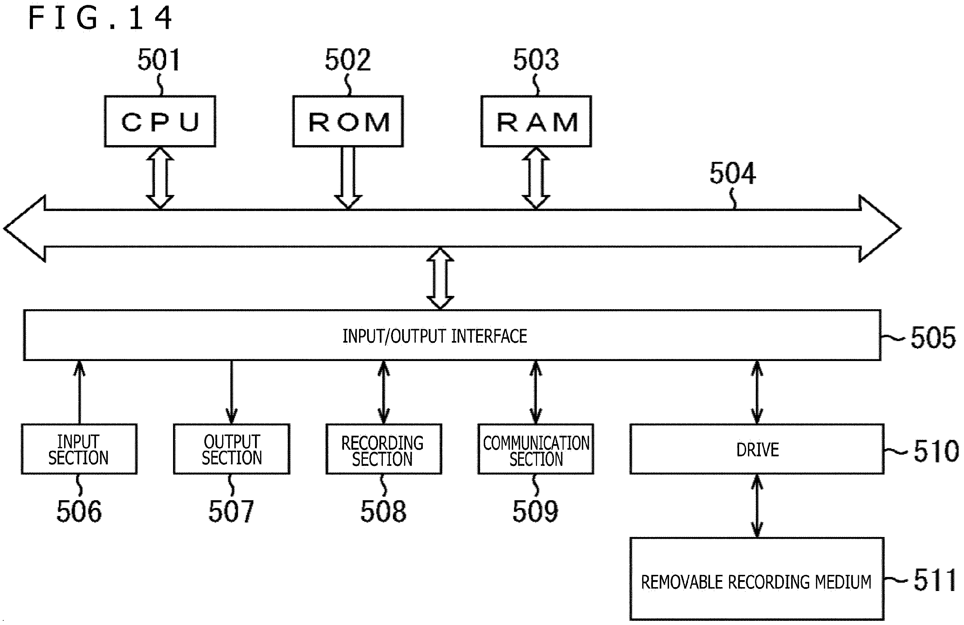

   FIG. 14 is a diagram illustrating a configuration example of a computer.

### [Description of Embodiments]

Embodiments to which the present technique is applied will be described below with reference to the drawings.

### <First Embodiment>

### <Configuration Example of Wireless Communication System>

In the present technique, for establishment of a network including a large number of small networks using high frequency bands and a control base station integrating and controlling the networks through communication in low frequency bands, frame exchanges are performed to establish connection between the control base station and each base station or slave terminal. This eliminates a need for predesigning of the networks and allows each apparatus to autonomously construct the networks.

Furthermore, in the present technique, the control base station uses frames and a communication method for notifying each base station and slave terminal of control information, and the control base station notifies each base station and slave terminal of information needed for space reclamation. This enables more efficient communication using space reclamation.

Furthermore, in the present technique, the control base station adds an identifier of the control base station to a signal transmitted by the control base station before transmitting the signal. This enables the control base station, the base station, and the slave terminal to terminate reception of a signal unnecessary for the control base station, the base station, and the slave terminal from another control base station, allowing effective utilization of communication resources and suppression of wasteful power consumption.

Now, a more specific embodiment of the present technique will be described.

The wireless communication system to which the present technique is applied is configured, for example, as illustrated in FIG. 1.

A wireless communication system illustrated in FIG. 1 includes one higher-level network including a plurality of lower-level network and a control base station (Master AP (Access Point)) corresponding to a wireless communication apparatus controlling (managing) the lower-level networks.

For example, the lower-level network is a network referred to as a BSS (Basic Service Set). The BSS includes a base station referred to as an access point (AP) and one or more slave terminals corresponding to wireless communication terminals connected to the base station and referred to as stations.

In the example illustrated in FIG. 1, one BSS (hereinafter referred to as the BSS1) includes a base station AP1 and a slave terminal STA1a and a slave terminal STA1b connected to the base station AP1. Note that in a case where the slave terminal STA1a and the slave terminal STA1b need not particularly be distinguished from each other, the slave terminals STA1a and STA1b are also simply referred to as a slave terminal STA1.

Additionally, one BSS (hereinafter referred to as the BSS2) includes a base station AP2 and a slave terminal STA2a and a slave terminal STA2b connected to the base station AP2. Note that in a case where the slave terminal STA2a and the slave terminal STA2b need not particularly be distinguished from each other, the slave terminals STA2a and STA2b are also simply referred to as a slave terminal STA2.

Furthermore, in the example illustrated in FIG. 1, the BSS1 and BSS2 are managed by the control base station MAP1 used as a master access point (Master AP), and the control base station MAP1, the BSS1, and the BSS2 form the higher-level network.

The higher-level network is hereinafter referred to as a phantom BSS, and in particular, the higher-level network including the control base station MAP1, the BSS1, and the BSS2 is also referred to as a phantom BSS1. For example, the phantom BSS1 is a wireless network in which the base station AP1 and the base station AP2 are not connected by wire or the like, and the control base station MAP1 controls the phantom BSS1.

In the BSS1 and the BSS2, as indicated by dotted arrows in the figure, a first frequency band is used to implement communication. In contrast, as indicated by solid arrows in the figure, the control base station MAP1 is connected to the base station AP1, the slave terminal STA1a, the slave terminal STA1b, the base station AP2, the slave terminal STA2a, and the slave terminal STA2b by a second frequency band. For example, the first frequency band is higher than the second frequency band. Additionally, communication in the second frequency band may be implemented with transmission power different from transmission power for communication in the first frequency band. For example, the communication in the second frequency band may be implemented with transmission power higher than the transmission power with which the communication in the first frequency band is performed. Furthermore, the communication in the second frequency band may be implemented with a frequency bandwidth different from a frequency bandwidth for the communication in the first frequency band. For example, the communication in the second frequency band may be implemented with a frequency bandwidth narrower than the frequency bandwidth for the communication in the first frequency band.

Note that the control base station MAP1 may function as a base station managing (controlling) the BSS or need not include any slave terminal controlled by the control base station MAP1 or form a BSS unlike in the example in FIG. 1.

### <Configuration Example of Wireless Communication Apparatus>

Now, a specific configuration example of a wireless communication apparatus corresponding to the control base station MAP1, the base station AP1, the base station AP2, the slave terminal STA1, or the slave terminal STA2 described above.

FIG. 2 is a diagram illustrating a configuration example of the wireless communication apparatus to which the present technique is applied.

A wireless communication apparatus 11 illustrated in FIG. 2 can function as any of the control base station MAP1, the base station AP1, the base station AP2, the slave terminal STA1, and the slave terminal STA2 illustrated in FIG. 1.

The wireless communication apparatus 11 includes a data processing section 21, a control section 22, a communication section 23, antennas 24-1 to 24-N, and a power supply section 25. Hereinafter, in a case where the antennas 24-1 to antenna 24-N need not be distinguished from one another, the antennas 24-1 to 24-N are also simply referred to as an antenna 24.

Additionally, the communication section 23 includes a modulation and demodulation section 31, a signal processing section 32, a channel estimation section 33, a wireless interface section 34-1 to a wireless interface section 34-N, and an amplifier section 35-1 to an amplifier section 35-N.

Hereinafter, in a case where the wireless interface section 34-1 to the wireless interface section 34-N need not be distinguished from one another, the wireless interface sections 34-1 to 34-N are also simply referred to as a wireless interface section 34. Additionally, in a case where the amplifier section 35-1 to the amplifier section 35-N need not be distinguished from one another, the amplifier sections 35-1 to 35-N are also simply referred to as an amplifier section 35.

Note that, in the example illustrated in FIG. 2, N (2 ≤ N) wireless interface sections 34, N amplifier sections 35, and N antennas 24 are provided but that a single wireless interface section 34, a single amplifier section 35, and a single antenna 24 may be provided, or two or more any number of wireless interface sections 34, two or more any number of amplifier sections 35, and two or more any number of antennas 24 may be provided.

Additionally, the wireless interface section 34, the amplifier section 35, and the antenna 24 may be formed into one component (the wireless interface section 34, the amplifier section 35, and the antenna 24 may be configured into one processing section). Furthermore, the functions of the amplifier section 35 may be included in the wireless interface section 34, with the amplifier section 35 omitted.

In a case where the data processing section 21 transmits data input from a protocol higher layer, that is, a packet (frame) is transmitted, the data processing section 21 generates a packet for wireless transmission, from the data input from the protocol higher layer and implements data processing such as addition of a header and addition of an error detection code for performing media access control (MAC). The data processing section 21 feeds the modulation and demodulation section 31 with a packet resulting from the data processing.

Additionally, the data processing section 21 receives data from the modulation and demodulation section 31, that is, a packet is received, the data processing section 21 implements data processing such as analysis of a MAC header, detection of a packet error, and reorder processing on the packet fed from the modulation and demodulation section 31. The data processing section 21 feeds the protocol higher layer with data resulting from the data processing.

The control section 22 delivers information between the sections (data processing section 21, control section 22, and communication section 23 (modulation and demodulation section 31, signal processing section 32, channel estimation section 33, wireless interface section 34, and amplifier section 35)).

Furthermore, the control section 22 performs control of the sections of the wireless communication apparatus 11, for example, setting of parameters in the modulation and demodulation section 31 and the signal processing section 32, scheduling of packets in the data processing section 21, setting of parameters and control of transmission power for the wireless interface section 34 and the amplifier section 35.

In addition, the control section 22 appropriately controls the sections of the wireless communication apparatus 11 to realize construction of the phantom BSS1 described above, transmission and reception of signals (frames) in the phantom BSS1, operation of the phantom BSS1, and the like.

The communication section 23 executes processing needed to transmit or receive a packet by wireless communication, and transmits or receives the packet via the antenna 24.

The antenna 24 transmits, as a wireless signal, the packet (frame) fed from the communication section 23. Additionally, the antenna 24 receives and feeds the wireless signal in the packet to the communication section 23.

In a case where a packet is transmitted, the modulation and demodulation section 31 executes conversion processing such as encoding (coding), interleaving, and modulation on the packet fed from the data processing section 21 on the basis of a coding and modulation scheme for which parameters are set by the control section 22, to generate a data symbol stream. The modulation and demodulation section 31 feeds the generated data symbol stream to the signal processing section 32.

On the other hand, in a case where a packet is received, the modulation and demodulation section 31 executes, on the data symbol stream fed from the signal processing section 32, processing opposite (reverse) to the processing executed in the case where the packet is transmitted as described above. In other words, the modulation and demodulation section 31 executes the opposite processing such as demodulation, deinterleaving, or decoding on the data symbol stream fed from the signal processing section 32, and feeds the data processing section 21 and the control section 22 with a packet resulting from the opposite processing.

In a case where a packet is transmitted, the signal processing section 32 executes signal processing on a data symbol stream from the modulation and demodulation section 31 as necessary, the signal processing including spatial processing such as MIMO (Multiple-Input and Multiple-Output) which is useful for spatial separation, and thus the signal processing section 32 generates one or more transmission symbol streams. The signal processing section 32 feeds each of the generated one or more transmission symbol streams to each of the one or more wireless interface sections 34.

On the other hand, in a case where a packet is received, the signal processing section 32 executes signal processing on a reception symbol stream fed from the wireless interface section 34, and performs spatial processing such as spatial separation on the reception symbol stream as necessary and feeds a resultant data symbol stream to the modulation and demodulation section 31.

The channel estimation section 33 computes a complex channel gain for a propagation path on the basis of a preamble portion and a training signal portion of a reception symbol stream fed from the wireless interface section 34. The channel estimation section 33 feeds the computed complex channel gain to the modulation and demodulation section 31 and the signal processing section 32 via the control section 22. The complex channel gain thus obtained is utilized for demodulation in the modulation and demodulation section 31 and the spatial processing in the signal processing section 32.

In a case where a packet is transmitted, the wireless interface section 34 performs a DA (Digital to Analog) conversion on a transmission symbol stream corresponding to an input from the signal processing section 32 into an analog signal, and executes processing such as filtering and upconversion to a carrier frequency. The wireless interface section 34 feeds the amplifier section 35 with a transmission signal resulting from the processing such as the DA conversion, filtering, and upconversion to the carrier frequency.

On the other hand, in a case where a packet is received, the wireless interface section 34 executes, on an input (reception signal) from the amplifier section 35, processing opposite to the processing executed in a case where a packet is transmitted, and feeds the signal processing section 32 and the channel estimation section 33 with a signal resulting from the opposite processing (reception symbol stream).

In a case where a packet is transmitted, the amplifier section 35 amplifies a transmission signal from the wireless interface section 34 to predetermined power, and the wireless communication apparatus 11 wirelessly transmits the amplified transmission signal from the antenna 24 as a wireless signal.

Additionally, in a case where a packet is received, the amplifier section 35 amplifies, to predetermined power, a wireless signal received by the antenna 24, and feeds the amplified signal to the wireless interface section 34 as a reception signal.

Note that, for the amplifier section 35, at least one of the function used during transmission or the function used during reception can be included in the wireless interface section 34.

The power supply section 25 includes a battery power supply or a fixed power supply and supplies power to the sections of the wireless communication apparatus 11.

### <Construction of Phantom BSS>

Now, a frame format will be described that is used for construction of the above-described phantom BSS, control of communication in the phantom BSS, and the communication in the phantom BSS.

First, the construction of the phantom BSS will be described.

The phantom BSS includes one or more base stations or a plurality of BSSs formed (constructed) by base stations. In a sequence for the construction of the phantom BSS, for example, as illustrated in FIG. 3, the control base station (Master AP), the base station (AP), and the slave terminal (STA) connected to the base station perform the respective operations to construct the phantom BSS.

In the example illustrated in FIG. 3, the characters "Master AP" represent the control base station, the characters "AP" represent the base station, and the characters "STA" represent the slave terminal. For example, the control base station in this case corresponds to a control base station MAP1 in FIG. 1, the base station corresponds to a base station AP1 or a base station AP2 in FIG. 1, and the slave terminal corresponds to a slave terminal STA1 or a slave terminal STA2.

Note that the control base station need not include any slave terminal directly controlled by the control base station or need not construct a BSS in which the control base station functions as a base station, or may construct a BSS of the control base station. Additionally, the slave terminal may be a station connected to none of the base stations, in other words, an unassociated STA.

In the example illustrated in FIG. 3, first, the control base station transmits a Master Beacon frame corresponding to a beacon frame used as a phantom BSS as indicated by arrow A11. At this time, for example, the control base station transmits the Master Beacon frame at a frequency lower than a transmission frequency for a beacon frame from a normal BSS transmitted by a base station located within a detectable range.

The Master Beacon frame stores an identifier for identifying the control base station, an identifier identifying the phantom BSS managed (controlled) by the control base station, and operation and function information including information related to the operations and functions of the phantom BSS.

Here, the identifier identifying the phantom BSS is an identifier indicating that the frame including the identifier has been transmitted by the communication in the phantom BSS, that is, indicating that the frame has been transmitted from the phantom BSS controlled by the control base station. Additionally, the functions of the phantom BSS are functions that can be supported by the phantom BSS, for example, support of space reclamation by the phantom BSS.

The Master Beacon frame includes destination information indicating the destination of the Master Beacon frame, and the destination indicated by the destination information may correspond to a Broadcast Address, in other words, all the wireless communication apparatuses on the network.

When the Master Beacon frame is thus transmitted by the control base station, the base stations and slave terminals within the range in which the control base station can communicate with the base stations and slave terminals receive the transmitted Master Beacon frame.

Then, the base stations and the slave terminals determine whether to perform construction of the phantom BSS controlled (managed) by the control base station and connection to the phantom BSS, on the basis of information stored in the received Master Beacon frame, that is, the identifier of the control base station, the identifier of the phantom BSS, and the operation and function information.

Here, the state in which the phantom BSS is constructed is the state in which the base station or the slave terminal receives frames including the identifier of the phantom BSS, and from the viewpoint of the control base station, the state in which the control base station recognizes which base station or slave terminal is under the control of the control base station.

Additionally, the state of connection to the phantom BSS (control base station) is the state in which an association is made between the control base station and the base station or the slave terminal.

The base station or the slave terminal having determined not to perform construction of and connection to the phantom BSS after receiving the Master Beacon frame subsequently transmits nothing special.

In contrast, the base station or the slave terminal having determined to perform construction of and connection to the phantom BSS execute a series of frame exchanges described below.

In FIG. 3, arrow A12 and arrow A13 indicate frame exchanges between the control base station and the base station, and arrow A14 and arrow A15 indicate frame exchanges between the control base station and the slave terminal.

In the series of frame exchanges for construction of and connection to the phantom BSS, first, the base station or the slave terminal transmits a Master Probe Request frame to the control base station to notify the control base station of the presence of the base station or the slave terminal.

The Master Probe Request frame is, for example, a frame including an identifier identifying the base station or the slave terminal corresponding the source of the Master Probe Request frame, and the identifier of the phantom BSS, the frame being destined for the control base station.

When receiving the Master Probe Request frame transmitted by the base station or the slave terminal, the control base station transmits a Master Probe Response frame to the base station or the slave terminal as a response to the Master Probe Request frame to notify the base station or the slave terminal corresponding to the source of the Master Probe Request frame that the presence of the base station or the slave terminal has been confirmed.

Then, the base station or the slave terminal transmits, to the control base station, a Master Authentication Request frame corresponding to a frame indicating a request for authentication, to request the control base station to authenticate the base station or the slave terminal.

When receiving the Master Authentication Request frame, the control base station authenticates the base station or the slave terminal. As a result, in a case where the base station or the slave terminal is correctly authenticated, the control base station transmits a Master Authentication Response frame to the base station or the slave terminal to notify the base station or the slave terminal that the base station or the slave terminal has been authenticated.

Furthermore, when receiving the Master Authentication Response frame, the base station or the slave terminal transmits a Master Association Request frame corresponding to a frame indicating a request for connection to the control base station to request the control base station for connection to the control base station.

Then, when receiving the Master Association Request frame, the control base station transmits a Master Association Response frame indicating that the base station or the slave terminal is permitted to connect to the control base station to notify the base station or the slave terminal that the connection is permitted. The series of frame exchanges ends.

When the frame exchanges are performed as described above, the phantom BSS is constructed and connection to the phantom BSS is completed.

Note that the control base station may implement the above-described frame exchanges with a plurality of base stations or slave terminals and that the unassociated STA may perform the above-described frame exchanges with the control base station to connect to the phantom BSS (control base station) while remaining unconnected to the base station (BSS).

Additionally, in the above-described example illustrated in FIG. 3, the slave terminal performs frame exchanges directly with the control base station to connect to the control base station. However, each slave terminal may be connected to the control base station via the base station.

In such a case, for example, a sequence for constructing a phantom BSS is as illustrated in FIG. 4. Note that, in FIG. 4, the characters "Master AP" represent the control base station, the characters "AP" represent the base station, and the characters "STA" represent the slave terminal.

In the example in FIG. 4, as is the case indicated by arrow A11 in FIG. 3, the control base station transmits the Master Beacon frame of the phantom BSS as indicated by arrow A21.

Then, the base station receives the Master Beacon frame, determines to perform construction of and connection to the phantom BSS, and then executes frame exchanges with the control base station as indicated by arrow A22 and arrow A23 as is the case indicated by arrow A12 and arrow A13 in FIG. 3.

Specifically, the control base station and the base station exchange (transmit and receive) the Master Probe Request frame, the Master Probe Response frame, the Master Authentication Request frame, the Master Authentication Response frame, the Master Association Request frame, and the Master Association Response frame as described above.

Note that, in this example, the slave terminal performs no frame exchanges with the control base station.

When frame exchanges are performed between the control base station and the base station, the base station connected to the control base station (phantom BSS) subsequently transmits a frame (STA info) including STA information corresponding to information related to connection, to the control base station, of the slave terminal controlled by the base station as indicated by arrow A24. The frame including the STA information is particularly referred to as an STA info frame. The STA info frame is a frame for establishing connection between the control base station and the slave terminal controlled by the base station.

The STA information stored in the STA info frame includes, for example, for each slave terminal controlled by the base station, type information regarding the slave terminal, an identifier identifying the slave terminal, function information indicating the functions of the slave terminal, and position related information related to the relative or absolute position of the slave terminal on a space.

Here, the type information regarding the slave terminal is, for example, information indicating which wireless communication standard is supported by the slave terminal, and the function information regarding the slave terminal is, for example, information indicating functions that are included in the functions of the wireless communication standard supported by the slave terminal and that can be supported by the slave terminal.

The control base station having received such an STA info frame can learn the presence of the slave terminal controlled by each base station without direct frame exchanges with the slave terminal and can recognize the wireless communication standard and functions that can be supported by the slave terminal, the position of the slave terminal, and the like.

Note that the STA info frame may be spontaneously transmitted from the base station or that the base station may transmit the STA info frame in response to a request from the control base station.

Furthermore, the STA info frame may be transmitted by the base station as a part of the Master Probe Request frame, the Master Authentication Request frame, or the Master Association Request frame. Specifically, the STA information may be stored in one of the frames, which may function as an STA info frame.

Similarly, in a case where the control base station requests the base station to transmit the STA info frame, the request may be included in the Master Probe Response frame, the Master Authentication Response frame, or the Master Association Response frame.

Additionally, the control base station having received the STA info frame may notify the base station of information related to the slave terminal to be permitted to connected to the phantom BSS. Here, slave terminals not permitted to connect to the phantom BSS include, for example, slave terminals not supporting the functions of the phantom BSS.

Furthermore, the base station having transmitted the STA info frame may subsequently transmit a Master AP info frame including control base station information including information related to the control base station, to the slave terminal controlled by the base station as indicated by arrow A25. The Master AP info frame is a frame for establishing connection between the control base station and the slave terminal.

The control base station information stored in the Master AP info frame includes, for example, type information regarding the control base station, the identifier of the control base station, function information indicating functions supported by the control base station, and position related information related to the relative or absolute position of the control base station on the space. Here, the type information and the function information regarding the control base station are similar to the type information and the function information regarding the slave terminal.

Note that the Master AP info frame may be transmitted separately to each slave terminal, in other words, may be destined for each slave terminal or for addresses indicating that the frame is destined for a plurality of slave terminals.

When receiving the Master AP info frame as described above, each slave terminal can recognize the control base station to which the base station connected to the slave terminal is connected from the control base station information stored in the Master AP info frame and thus establishes connection to the control base station on the basis of the control base station information.

Specifically, the control base station and the slave terminal can each recognize, from the STA information and the control base station information, that the slave terminal is connected to the control base station, indicating that the control base station and the slave terminal are connected via the base station. In this case, each slave terminal can connect directly to the control base station without frame exchanges with the control base station.

Here, the following can be transmitted in a second frequency band different from a first frequency band used for BSS communication: the Master Beacon frame, Master Probe Request frame, Master Probe Response frame, Master Authentication Request frame, Master Authentication Response frame, Master Association Request frame, Master Association Response frame, and STA info frame transmitted in the sequence described with reference to FIG. 3 and FIG. 4.

At this time, the second frequency band used for the communication in the phantom BSS can be defined as a frequency band lower than the first frequency band used for the BSS communication.

Note that the Master AP info frame transmitted from the base station to the slave terminal may be transmitted in the second frequency band used for the communication in the phantom BSS or in the first frequency band used for the BSS communication.

Additionally, the above-described frames can be provided with, for transmission, an identifier indicating that the frame has been transmitted from the phantom BSS, in other words, the identifier of the phantom BSS; the above-described frames include the Master Beacon frame, Master Probe Request frame, Master Probe Response frame, Master Authentication Request frame, Master Authentication Response frame, Master Association Request frame, Master Association Response frame, and STA info frame.

The identifier of the phantom BSS may be, for example, stored in (applied to) a physical header (Phy Header) of each frame. Additionally, the same identifier of the phantom BSS may be used for a plurality of phantom BSSs or different identifiers (values) may be used for the respective phantom BSSs.

Furthermore, the first frequency band used for the BSS communication may be used to transmit the Master Beacon frame, Master Probe Request frame, the Master Probe Response frame, the Master Authentication Request frame, the Master Authentication Response frame, the Master Association Request frame, the Master Association Response frame, and the STA info frame, in other words, the first frequency band may be the same as the second frequency band.

In such a case, for example, the identifier of the phantom BSS may be one of a plurality of identifiers assigned as identifiers used by BSSs that is not actually used for the BSSs or may be the same as an identifier actually used by the BSS.

Specifically, for example, in the example illustrated in FIG. 1, a plurality of pieces of BSS color information with different values are assumed to be assigned to the BSS1 as the identifier of the BBS1. Here, for example, it is assumed that BSS color information with a value of C1 and BSS color information with a value of C2 are assigned to the BSS1 and that the BSS color information with a value of C1 is used as the actual identifier of the BSS1.

At this time, for example, in a case where the control base station MAP1 communicates with the base station AP1 or the slave terminal STA1, included in the BSS1, in other words, in a case where a frame destined for the base station AP1 or the slave terminal STA1 is transmitted, the BSS color information with a value of C1, corresponding to the identifier of the BSS1 to which the base station AP1 or the slave terminal STA1 belongs, may be directly used as the identifier of the phantom BSS1.

In this case, the base station AP2 or the slave terminal STA2 included in the BSS2 can determine that a frame including the BSS color information with a value of C1 and transmitted from the phantom BSS1 is not destined for the base station AP2 or the slave terminal STA2 and terminate receiving the frame.

Additionally, the BSS color information with a value of C2 may be directly used as the identifier of the phantom BSS1. In this case, whether the frame has been transmitted from the BSS1 or from the phantom BSS1 can be easily identified. Additionally, in this case, the BSS2 may be assigned with the BSS color information with a value of C2 as the identifier of the phantom BSS1.

Furthermore, the Master AP info frame may include the identifier of the BSS indicating that the frame has been transmitted from the BSS or the identifier of the phantom BSS indicating that the frame has been transmitted from the phantom BSS, depending on the frequency band of the transmission.

In addition, during the sequence for constructing the phantom BSS described with reference to FIG. 3 or FIG. 4 or before or after the sequence, the control base station may implement a check sequence for checking whether the phantom BSS has been constructed between the control base station and the base station or the slave terminal, whether a signal (frame) from the phantom BSS can be transmitted and received between the control base station and the base station or the slave terminal, and whether the base station or the slave terminal supports the operation of the phantom BSS.

In such a case, for example, the control base station transmits, to the base station or the slave terminal, a capability check request frame including information related to the phantom BSS such as the type information regarding the control base station and the function information regarding the control base station which allows the base station or the slave terminal to check whether transmission and reception of signals are possible or not and to check the operation of the communication in the phantom BSS.

When receiving the request frame transmitted from the control base station, the base station or the slave terminal performs a check of whether transmission and reception of signals are enabled or not, a check of operation of the communication in the phantom BSS, and the like on the basis of information regarding the phantom BSS included in the request frame, and transmits a capability check response frame indicating the results of the checks to the control base station.

By thus exchanging the request frame and the response frame for the capability check between the control base station and the base station or the slave terminal, the construction or operation of the phantom BSS can be checked. Note that such a check sequence may be implemented between the control base station and the unassociated STA.

Furthermore, the control base station may determine whether it is appropriate that the slave terminal connected to the control base station is connected to another base station different from the base station to which the slave terminal is currently connected.

For example, on the basis of the spatial positional relation between the slave terminal and different base stations identified by the position related information included in the STA info frame, in other words, a distance from each base station to the slave terminal, the control base station determines whether connecting the slave terminal to another base station is appropriate.

Then, in the case of determining that connecting the slave terminal to another base station is appropriate, the control base station selects an appropriate base station as a new connection destination of the slave terminal, for example, the base station located closest to the slave terminal, and transmits, to the slave terminal, a frame including information related to the base station. In other words, the frame inviting connection to another base station different from the base station of the BSS to which the slave terminal belongs is transmitted to the slave terminal. For example, the frame includes the identifier of the base station and the like.

Accordingly, the slave terminal having received the frame from the control base station can change the connection destination to the base station to be newly connected, which is indicated by the information included in the frame.

Furthermore, in the case of detecting connection from the unassociated STA, the control base station may select the appropriate base station to be connected to the unassociated STA and transmit, to the unassociated STA, a frame including information related to the selected base station. In this case, the unassociated STA having received the frame from the control base station can start connection to the base station to be connected, which is indicated by the information included in the frame.

### <Control of Communication in Phantom BSS>

When the phantom BSS is constructed as described above, the control base station controls the communication in the phantom BSS and the BSS to enable more efficient communication.

For example, the phantom BSS includes a plurality of BSSs, and efficient operation of the BSSs needs notification of information related to communication in each BSS to the BSSs included in the phantom BSS. In particular, a wireless LAN needs notification of information on the assumption of application of space reclamation corresponding to a technique for effectively utilizing resources. Furthermore, the notification from the control base station itself needs to be prevented from interfering with the BSSs controlled by another base station.

Thus, in the present technique, for example, in accordance with a sequence illustrated in FIG. 5, the phantom BSS transmits information related to the BSS communication, and on the basis of the information, communication using the other BSSs is controlled.

Note that FIG. 5 illustrates an example in which, in the phantom BSS1 illustrated in FIG. 1, the control base station MAP1 controls communication in the BSS2.

In FIG. 5, the characters "Master AP" represent the control base station MAP1, the characters "AP1" represent the base station AP1, and the characters "STA1" represent the slave terminal STA1. Additionally, the characters "AP2" represent the base station AP2, and the characters "STA2" represent the slave terminal STA2.

First, the BSS included in the phantom BSS, the base station or slave terminal that is to communicate notifies the control base station MAP1 of information related to communication in the BSS to which the base station or the slave terminal belongs, that is, SR information (SR info) including communication information.

In this example, the base station AP1 transmits, to the control base station MAP1, an SR info frame FL11 (packet) including the SR information.

For example, the SR information includes at least one of the identifier of the base station or the slave terminal that is to communicate, time schedule information, resource information, transmission power information, modulation and coding scheme information, allowed interference intensity information, priority, buffer information, communication type information, or information related to the positions and number of wireless communication terminals.

Here, the time schedule information is information indicating a time schedule for communication by the BSS, for example, a frame transmission start time and the length of a frame (signal) to be transmitted.

Additionally, the resource information is information indicating frequency resources and spatial resources used for the communication by the BSS, and the transmission power information is information indicating transmission power for the frame (packet) during the communication by the BSS.

The modulation and coding scheme information is information indicating a modulation and coding scheme used during the communication by the BSS, and the allowed interference intensity information is information indicating the allowed interference intensity in the communication by the BSS determined by the transmission power information and the modulation and coding scheme information. The priority is information indicating the priority of the frame (packet) transmitted and received in the communication by the BSS. The buffer information is information indicating the amount of packets to be transmitted, which are held by the base station or the slave terminal that is to communicate, that is, information indicating a buffer state for the packet to be transmitted.

Furthermore, the communication type information is information indicating the type of communication, for example, whether the communication by the BSS is uplink or downlink, what guard interval (symbol length) is used for the signal to be transmitted, and a coding scheme such as LDPC (Low Density Parity Check) or BCC (Binary Convoluted Coding) which is used for the communication by the BSS.

The information related to the positions and number of wireless communication terminals is, for example, information related to the number and positions of the wireless communication terminals for which the frame (signal) is destined during the communication by the BSS, In other words, information related to the number of slave terminals controlled by the base station and the positions of the slave terminals.

The SR information related to the BSS communication as described above can be utilized for communication based on space reclamation in another BSS. In other words, the SR information includes information for space reclamation such as the time schedule information, the resource information, the transmission power information, the modulation and coding scheme information, and the allowed interference intensity information.

Note that, when the communication in the BSS is determined to be performed, the SR information, that is, the SR info frame FL11, may be transmitted before the communication or periodically.

Additionally, in a case where the base station or the slave terminal starts communication of the base station or the slave terminal, the SR information may be transmitted simultaneously with the communication or immediately before the start of the communication. In addition, in the case of inviting a communication partner to start communication, that is, in the case of transmitting, to the communication partner, a trigger frame inviting transmission of the signal, the base station may transmit the SR information to the control base station.

Furthermore, the SR information may be transmitted using a frame for notifying the SR information or may be stored and transmitted in a frame that is transmitted for another purpose.

The SR info frame FL11 including such SR information stores the identifier of the phantom BSS1, and the SR info frame FL11 is transmitted in the above-described second frequency band.

The control base station MAP1 having received the SR info frame FL11 transmits control information to the base stations and the slave terminals belonging to all the BBSs included in the phantom BSS1 other than the BSS1 having transmitted the SR information on the basis of the SR information included in the SR info frame FL11, the control information being intended to control communication in these BSSs.

In this example, the control base station MAP1 uses the second frequency band to transmit the frame FL12 including the SR information itself as control information to the base station AP2 belonging to the BSS2. The frame FL12 includes an identifier indicating that the frame has been transmitted from the phantom BSS1, that is, the identifier of the phantom BSS1.

For example, the control information may be the same as at least a part of the SR information or may be information resulting from appropriate calculation based on the SR information in the control base station. Here, the information resulting from the appropriate calculation may be, for example, in the example illustrated in FIG. 5, the transmission power of the base station AP2 during communication calculated from the transmission power and position of the base station AP1, the allowed interference intensity, and the like included as the SR information.

Thus, on the basis of the SR information related to communication in the BSS1 and received from the base station AP1 that is to communicate, the control base station MAP1 generates control information for controlling communication using another BSS2, and transmits the control information to the base station AP2 in the BSS2. Accordingly, to allow communication to be implemented in the BSS2 as appropriate even in a case where communication is being performed in the BSS1, the control base station MAP1 can control the communication in the BSS2.

In the example in FIG. 5, when transmitting the SR info frame FL11 including the SR information, the base station AP1 subsequently implements communication in accordance with information such as the time schedule and the transmission power indicated by the SR information.

Here, the base station AP1 transmits a frame FL13 storing predetermined data to the slave terminal STA1, and the slave terminal STA1 having received the frame FL13 transmits an Ack frame FL14 indicating that the data has been correctly received to the base station AP1. In particular, the frame FL13 and the Ack frame FL14 are transmitted at the frequency indicated by the resource information in the SR information, and here, the frame FL13 and the Ack frame FL14 are transmitted in the above-described first frequency band.

Additionally, the base station or the slave terminal having received the frame storing the control information determines or calculates the time schedule, frequency resources or spatial resources, transmission power, modulation and coding scheme, allowed interference intensity, priority, communication type, and the like in the communication of the base station or the slave terminal on the basis of the control information. Then, the base station or the slave terminal performs the communication in the BSS to which the base station or the slave terminal belongs on the basis of a determination result or a calculation result.

In this example, the base station AP2 having received the frame FL12 storing the control information performs calculation as appropriate on the basis of the control information to determine the time schedule, frequency resources or spatial resources, transmission power, modulation and coding scheme, allowed interference intensity, priority, communication type, and the like in the communication in the BSS2 of the base station AP2.

Then, the base station AP2 transmits a frame FL15 storing predetermined data to the slave terminal STA2 in accordance with the determination, and the slave terminal STA2 having received the frame FL15 transmits an Ack frame FL16 indicating that the data has been correctly received to the base station AP2. Here, for example, space reclamation is used to transmit the frame FL15 and the Ack frame FL16 in the above-described first frequency band.

Note that, in the case of determining that implementing communication in the BSS2 of the base station AP2 is inappropriate on the basis of the control information, the base station AP2 may explicitly prohibit communication by the base station AP2 or the slave terminal belonging to the BSS2. In such a case, the base station AP2 refrains from communication in the BSS2 of the base station AP2 during an appropriate period, for example, until the communication in the BSS1 ends, and at an appropriate timing, transmits a frame to notify also the slave terminal STA2 controlled by the base station AP2 of an instruction that the communication in the BSS2 is to be stopped.

Here, the case where implementing the communication in the BSS2 is inappropriate is, for example, a case where a BSS1 packet in the control information has a priority higher than a preset predetermined priority or a case where the communication in the BSS2 fails to be implemented at an interference intensity equal to or lower than the allowed interference intensity of the communication in the BSS1 indicated by the control information.

Thus, the base station AP2 determines the transmission power and the like for the communication in the BSS2 to which the base station AP2 belongs on the basis of the control information received from the control base station MAP1. Accordingly, while suppressing the interference in the slave terminal STA1 receiving the frame FL13 storing the data, the base station AP2 can also implement communication to the slave terminal STA2. In other words, the space reclamation technique is used to enable more efficient communication according to the control information.

Note that, in the example described with reference to FIG. 5, the base station AP2 receives the frame including the control information and transmits the frame including the data to the slave terminal STA2 but that, in contrast, needless to say, the slave terminal STA2 may receive the frame including the control information and transmit the frame including the data to the base station AP2.

Additionally, in the example described with reference to FIG. 5, the control base station MAP1 generates control information on the basis of the SR information received from the base station AP1. However, the control base station MAP1 may generate control information on the basis of information included in the frame transmitted from the base station to the slave terminal or information that can be observed for the communication.

In such a case, for example, in accordance with a sequence illustrated in FIG. 6, the phantom BSS transmits the control information related to the BSS communication, and the communication by the BSS is controlled on the basis of the control information.

Note that FIG. 6 illustrates an example in which, in the phantom BSS1 illustrated in FIG. 1, the control base station MAP1 controls the communication in the BSS2.

In FIG. 6, the characters "Master AP" represent the control base station MAP1, the characters "AP1" represent the base station AP1, and the characters "STA1" represent the slave terminal STA1. Additionally, the characters "AP2" represent the base station AP2, and the characters "STA2" represent the slave terminal STA2.

First, in the BSS1 or BSS2 included in the phantom BSS1, the base station or the slave terminal starts communication in accordance with a normal communication procedure in the BSS.

In this example, the base station AP1 transmits a frame FL21 storing predetermined data to the slave terminal STA1, and the slave terminal STA1 having received the frame FL21 transmits an Ack frame FL22 indicating that the data has been correctly received to the base station AP1. Here, the frame FL21 and the Ack frame FL22 are transmitted in the above-described first frequency band.

Additionally, the frame FL21 may include information related to the communication between the base station AP1 and the slave terminal STA1 in the BSS1. In other words, at least partial information of the above-described SR information may be included in, for example, a SIG-A field of a physical header of the frame FL21.

Specifically, the information related to the communication in the BSS1, which is included in the frame FL21, may include the identifier of the base station or slave terminal that is to communicate, the time schedule information, the resource information, the transmission power information, the modulation and coding scheme information, the allowed interference intensity information, the priority, the buffer information, the communication type information, the information related to the positions and number of wireless communication terminals, and the like.

When detecting the communication in the BSS1, in other words, transmission of the frame FL21, the control base station MAP1 receives the frame FL21 and reads the information related to the communication in the BSS1, which is included in the received in the frame FL21. Additionally, the control base station MAP1 appropriately observes, for the communication in the BSS1, the information related to the communication in the BSS1. For example, by observing the transmission power and the like in the frame FL21, the control base station MAP1 can estimate the transmission power for the frame FL21.

The control base station MAP1 generates control information similar to the control information in the case in FIG. 5 on the basis of the information related to the communication in the BSS1, which has been read from the frame FL21, and the information obtained by observing the communication in the BSS1 and transmits a frame including the control information to the base station AP2 or the slave terminal STA2 in the BSS2. Here, the control base station MAP1 transmits a frame FL23 including the generated control information to the base station AP2 in the above-described second frequency band.

Note that the control information may be the same as at least a part of the information related to the communication in the BSS1, which has been read from the frame FL21, or the information obtained by observation of the communication in the BSS1, as is the case with FIG. 5. Additionally, the control information may be information obtained by appropriate calculation based on the information related to the communication in the BSS1, which has been read from the frame FL21, or the information obtained by observation of the communication in the BSS1, as is the case with FIG. 5.

When receiving the frame FL23 transmitted from the control base station MAP1, the base station AP2 executes appropriate calculation on the basis of the control information stored in the frame FL23 to determine the time schedule, frequency resources or spatial resources, transmission power, modulation and coding scheme, allowed interference intensity, priority, communication type, and the like for the communication in the BSS2 of the base station AP2.

Then, the base station AP2 transmits a frame FL24 storing predetermined data to the slave terminal STA2 in accordance with the determination, and the slave terminal STA2 having received the frame FL24 transmits an Ack frame FL25 indicating that the data has been correctly received to the base station AP2. Here, for example, space reclamation is used to transmit the frame FL24 and the Ack frame FL25 in the above-described first frequency band.

Note that, as is the case with FIG. 5, in the case of determining that implementing communication in the BSS2 of the base station AP2 is inappropriate on the basis of the control information, the base station AP2 may explicitly prohibit communication by the base station AP2 or the slave terminal belonging to the BSS2.

Thus, the base station AP2 determines the time schedule, the transmission power, and the like for the communication in the BSS2 to which the base station AP2 belongs on the basis of the control information received from the control base station MAP1. Accordingly, while suppressing the interference in the slave terminal STA1 receiving the frame FL21 storing the data, the base station AP2 can also implement communication to the slave terminal STA2. In other words, the space reclamation technique is used to enable more efficient communication according to the control information.

Note that, in the example described with reference to FIG. 6, the base station AP2 receives the frame including the control information and transmits the frame including the data to the slave terminal STA2 but that, in contrast, needless to say, the slave terminal STA2 may receive the frame including the control information and transmit the frame including the data to the base station AP2.

### <Frame Format Used for Communication in Phantom BSS>

Now, a frame format used for the communication in the phantom BSS will be described.

For example, the format of the frames used for the communication in the phantom BSS is as illustrated in FIG. 7.

Here, the frames used for the communication in the BSS include, for example, the Master Beacon frame, the Master Probe Request frame, the Master Probe Response frame, the Master Authentication Request frame, the Master Authentication Response frame, the Master Association Request frame, the Master Association Response frame, the STA info frame, the Master AP info frame, the frame storing the SR information, and the frame storing the control information as described above.

In FIG. 7, arrow W11 indicates an example in which the identifier of the phantom BSS (Master Cell ID) is stored in the physical header, and arrow W12 indicates an example in which the identifier of the phantom BSS is stored in a physical payload (MAC).

Specifically, in the example indicated by arrow W11, a frame used for the communication in the phantom BSS includes a physical header (Phy Header) disposed at the head of the frame and indicated by arrow Q11, the physical header being followed by a physical payload (Phy Payload) indicated by arrow Q12.

The physical header includes a CRC (Cyclic Redundancy Check) added to the tail end of the header, and thus a receiver of the control base station, the base station, the slave terminal, or the like receiving a frame transmitted in the phantom BSS can check contents described in the physical header at the point in time when the receiver receives the physical header instead of receiving the entire frame.

The physical header indicated by arrow Q11 includes L-STF (Legacy Short Training Field), L-LTF (Legacy Long Training Field), L-SIG (Legacy Signal field), and MC-SIG-A (Master Cell Signal field) arranged in this order from the head of the header.

The L-SIF and the L-LTF are fields in which a training signal is stored, and the L-SIG is a signal field in which rate information and length information in the data portion are stored.

Additionally, the MC-SIG-A following the L-SIG is a signal field (region) in which, for example, the information related to the communication in the BSS is stored, and in this example, the MC-SIG-A stores a Master Cell Id as the identifier of the phantom BSS. In particular, here, a shaded region represents a region where the Master Cell ID is stored. Note that the Master Cell ID of the phantom BSS stored in the MC-SIG-A may be a part of the identifier information.

Furthermore, the physical payload following the physical header and indicated by arrow Q12 includes one or more MAC payloads (data regions) storing data to be transmitted, and includes MAC headers each added to the head of the corresponding MAC payload. The MAC header includes information indicating the source and destination of the data, in other words, information indicating the source and destination (address) of the frame indicated by arrow W11.

In the phantom BSS, for example, a frame including a physical header including the identifier of the phantom BSS (Master Cell ID) is used for the communication in the phantom BSS. Accordingly, another apparatus in the phantom BSS, that is, the control base station, the base station, or the slave terminal can detect that the frame has been transmitted from the phantom BSS at the point in time when the control base station, the base station, or the slave terminal receives the frame up to the tail end of the physical header instead of receiving the entire frame.

In a case where the identifier assigned to the BSS included in the phantom BSS is used as the identifier of the phantom BSS, the identifier of the phantom BSS may be stored in a Partial AID field of VHT-SIG-A specified in IEEE (The Institute of Electrical and Electronic Engineers) 802.11-2016 or a BSS Color field of HE-SIG-A specified in IEEE802.11ax.

In contrast, for example, even in a case where the identifier of the phantom BSS (Master Cell ID) is stored in the physical payload as indicated by arrow W12, the frame basically has a configuration similar to the configuration in the example indicated by arrow W11.

Specifically, in the example indicated by arrow W12, the physical header (Phy Header) indicated by arrow Q21 is disposed at the head of the frame, and the portion following the physical header corresponds to the physical payload (Phy Payload) indicated by arrow Q22.

The physical header basically has a configuration similar to the configuration in the example indicated by arrow W11 but does not store the identifier of the phantom BSS.

Additionally, the physical payload includes one or more MAC payloads in which data to be transmitted is stored, and the MAC payload includes at least one frame or field in which the identifier of the phantom BSS (Master Cell ID) is stored. Furthermore, the physical payload includes MAC headers each added to the head of the corresponding MAC payload, and the MAC header includes information indicating the source and destination of the data.

A modulation and coding scheme having a higher degree of modulation can be used for the physical payload than for the physical header. Thus, storing the identifier of the phantom BSS in the physical payload enables a reduction in length on the time axis for the identifier, allowing suppression of wasteful use of communication resources.

As described above, according to the present technique, in a wireless network in which a plurality of base stations is connected together by wire or the like, the use of the Master Beacon frame including the identifier of the phantom BSS allows a phantom BSS not predesigned to be autonomously constructed. In other words, a plurality of lower-level wireless networks (BSS) not predesigned can be used to construct the phantom BSS, corresponding to a higher-level wireless network.

The phantom BSS is a higher-level network including a large number of small BSSs using higher frequency bands and a control base station integrating and controlling the BSSs by communication in lower frequency bands. Such a phantom BSS enables both appropriate communication capacity and coverage to be achieved.

Additionally, in the phantom BSS, the control base station connects to the base station constructing the BSS and can thus collect information related to the BSS communication. Then, the control base station generates control information on the basis of the thus collected information related to the BSS communication and can thus control communication in another BSS. This allows prevention of possible signal interference between BSSs communicating independently with each other.

In this case, while communication is under way in one of the BBSs, communication can be performed in the other BBS, allowing communication resources to be effectively used.

Furthermore, the signal (frame) transmitted by the control base station and used as the phantom BSS stores the identifier of the phantom BSS. Thus, with a plurality of phantom BSSs, the control base station included in each phantom BSS can identify a signal from another phantom BSS and terminate reception of the signal. Accordingly, the control base station can transmit a signal (frame) from the phantom BSS of the control base station, enabling the effective use of communication resources between phantom BSSs and allowing suppression of wasteful power consumption.

Similarly, in a BBS constructed by the base station connected to the control base station of the phantom BSS can identify a signal from another phantom BSS and terminate reception of the signal. Accordingly, the BSS can effectively use communication resources, while suppressing wasteful power consumption.

In particular, in a case where the phantom BSS has a large coverage and a signal (frame) from the phantom BSS reaches a remote position, a large number of BSSs are affected by the signal. Thus, the effect of termination of reception of an unnecessary signal is more significant.

### <Description of Phantom BSS Construction Processing>

Now, processing will be described that is executed in a case where the wireless communication apparatus 11 described above functions as a control base station, a base station, or slave terminal.

First, phantom BSS construction processing will be described that is executed when the wireless communication apparatus 11 functioning as a control base station constructs the phantom BSS in accordance with the sequence described with reference to FIG. 4. In other words, phantom BSS construction processing executed by the wireless communication apparatus 11 will be described with reference to a flowchart in FIG. 8.

In step S11, the communication section 23 transmits, via the antenna 24, the Master Beacon frame, more specifically, a packet including the Master Beacon frame.

Specifically, under the control of the control section 22, the data processing section 21 generates, in a format indicated by arrow W11 and arrow W12 in FIG. 7, a Master Beacon frame including the identifier of the phantom BSS and operation and function information related to the operations and functions of the phantom BSS.

Additionally, the Master Beacon frame includes, as information indicating a source, the identifier of the wireless communication apparatus 11 itself used as the control base station, and as information indicating a destination, destination information indicating, for example, a Broadcast Address.

The data processing section 21 feeds a Master Beacon frame (packet) to the amplifier section 35 via the set of sections from the modulation and demodulation section 31 to the wireless interface section 34. Additionally, the amplifier section 35 amplifies a transmission signal corresponding to the Master Beacon frame fed from the wireless interface section 34, and then wirelessly transmits the amplified signal in the second frequency band through the antenna 24, thus transmitting the Master Beacon frame.

Accordingly, the base station or the unassociated STA within the range in which the base station or the unassociated STA can communicate with the wireless communication apparatus 11 receives the Master Beacon frame, and in accordance with the Master Beacon frame, executes processing in step S42 in FIG. 9 described below to transmit the Master Probe Request frame, notifying the presence of the base station or the unassociated STA.

Then, frame exchanges are performed between the wireless communication apparatus 11 used as the control base station and the base station or the unassociated STA for construction of and connection to the phantom BSS1. Specifically, the control section 22 controls the frame exchanges for constructing and connecting to the phantom BSS1, thus causing processing in subsequent steps S12 to S17 to be executed.

In step S12, the communication section 23 receives, through the antenna 24, the Master Probe Request frame transmitted from each of one or more base stations or the unassociated STA.

In other words, the amplifier section 35 of the communication section 23 receives a reception signal (packet) corresponding to the Master Probe Request frame through the antenna 24 and feeds the signal to the control section 22 via the set of sections from the wireless interface section 34 to the data processing section 21.

Accordingly, the control section 22 recognizes the presence of the base station or the unassociated STA within the range in which the base station or the unassociated STA can connect to the wireless communication apparatus 11 from the identifier of the base station or the unassociated STA included in the Master Probe Request frame as information indicating the source of the received Master Probe Request frame.

When recognizing the presence of the base station or the unassociated STA, the control section 22 controls and causes the data processing section 21 to generate a Master Probe Response frame including the identifier of the phantom BSS, for example, in the format indicated by arrow W11 or arrow W12 in FIG. 7.

Under the control of the control section 22, the data processing section 21 generates a Master Probe Response frame indicating that the control base station has confirmed the presence of the base station or the unassociated STA and feeds the Master Probe Response frame to the amplifier section 35 via the set of sections from the modulation and demodulation section 31 to the wireless interface section 34.

In step S13, the amplifier section 35 amplifies a transmission signal corresponding to the Master Probe Response frame fed from the wireless interface section 34 and then wirelessly transmits the amplified signal in the second frequency band through the antenna 24, thus transmitting the Master Probe Response frame to the base station or the unassociated STA.

Then, the base station or the unassociated STA having received the Master Probe Response frame executes processing in step S44 in FIG. 9 described below to transmit the Master Authentication Request frame requesting the wireless communication apparatus 11 used as the control base station to authenticate the base station or the unassociated STA.

In step S14, the communication section 23 receives, through the antenna 24, the Master Authentication Request frame transmitted from each of one or more base stations or the unassociated STA.

Specifically, the amplifier section 35 of the communication section 23 receives, through the antenna 24, a reception signal (packet) corresponding to the Master Authentication Request frame, and feeds the signal to the control section 22 via the set of sections from the wireless interface section 34 to the data processing section 21.

In accordance with the received Master Authentication Request frame, the control section 22 authenticates the base station or the unassociated STA corresponding to the source of the Master Authentication Request frame. Then, when the base station or the unassociated STA is correctly authenticated, the control section 22 controls the data processing section 21 to generate a Master Authentication Response frame including the identifier of the phantom BSS, for example, in the format indicated by arrow W11 or arrow W12 in FIG. 7.

Under the control of the control section 22, the data processing section 21 generates a Master Authentication Response frame indicating that the base station or the unassociated STA has been authenticated, and feeds the Master Authentication Response frame to the amplifier section 35 via the set of sections from the modulation and demodulation section 31 to the wireless interface section 34.

In step S15, the amplifier section 35 amplifies a transmission signal corresponding to the Master Authentication Response frame fed from the wireless interface section 34, and then wirelessly transmits the amplified signal in the second frequency band through the antenna 24, thus transmitting the Master Authentication Response frame to the base station or the unassociated STA.

Then, the base station or the unassociated STA having received the Master Authentication Response frame executes processing in step S46 in FIG. 9 described below to transmit the Master Association Request frame requesting the wireless communication apparatus 11 used as the control base station to connect to the base station or the unassociated STA.

In step S16, the communication section 23 receives, through the antenna 24, the Master Association Request frame transmitted from each of one or more base stations or the unassociated STA.

Specifically, the amplifier section 35 of the communication section 23 receives a reception signal (packet) corresponding to the Master Association Request frame through the antenna 24 and feeds the signal to the control section 22 via the set of sections from the wireless interface section 34 to the data processing section 21.

In accordance with the received Master Association Request frame, the control section 22 connects to the base station or the unassociated STA corresponding to the source of the Master Association Request frame. Specifically, the control section 22 controls and causes the data processing section 21 to generate a Master Association Response frame including the identifier of the phantom BSS, for example, in the format indicated by arrow W11 or arrow W12 in FIG. 7.

Under the control of the control section 22, the data processing section 21 generates a Master Association Response frame indicating that connection is permitted and feeds the Master Association Response frame to the amplifier section 35 via the set of sections from the modulation and demodulation section 31 to the wireless interface section 34.

In step S17, the amplifier section 35 amplifies a transmission signal corresponding to the Master Association Response frame fed from the wireless interface section 34 and then wirelessly transmits the amplified signal in the second frequency band through the antenna 24, thus transmitting the Master Association Response frame to the base station or the unassociated STA.

Additionally, when the base station or the unassociated STA receives the Master Association Response frame and is thus connected to the wireless communication apparatus 11 used as the control base station, the base station transmits the STA info frame including the STA information regarding the slave terminal controlled by the base station.

The STA info frame is transmitted by processing in step S48 in FIG. 9 described below but may be transmitted spontaneously from the base station or in response to a request from the control base station.

In step S18, the communication section 23 receives, through the antenna 24, the STA info frame transmitted from base station.

Specifically, the amplifier section 35 of the communication section 23 receives, through the antenna 24, a reception signal (packet) corresponding to the STA info frame and feeds the signal to the control section 22 via the set of sections from the wireless interface section 34 to the data processing section 21.

When the STA info frame is thus fed to the control section 22, the control section 22 can obtain, from the STA information included in the STA info frame, the type and identifier, the function information, and the position related information regarding the slave terminal controlled by the base station and is thus connected to the slave terminal.

When the wireless communication apparatus 11 used as the control base station is connected to the base station, the unassociated STA, or the slave terminal as described above, the phantom BSS is constructed and the phantom BSS construction processing ends.

Note that, in the above-described example, the phantom BSS is constructed in accordance with the sequence illustrated in FIG. 4 but that, in a case where the phantom BSS is constructed in accordance with the sequence illustrated in FIG. 3, processing in step S11 to step S17 is executed as the phantom BSS construction processing.

In this case, in step S13, step S15, and step S17, each frame is transmitted with not only the base station or the unassociated STA but also the slave terminal set as a destination, and the base station, the unassociated STA, or the slave terminal is connected directly to the wireless communication apparatus 11 used as the control base station. Additionally, in this case, the processing in step S18 is not executed.

Furthermore, in a case where the phantom BSS is constructed in accordance with the sequence illustrated in FIG. 3 or the sequence illustrated in FIG. 4, the check sequence may be implemented before or after the phantom BSS construction processing or during the phantom BSS construction processing.

In such a case, the control section 22 controls the data processing section 21 or the communication section 23 to control execution of the check sequence.

Specifically, under the control of the control section 22, the data processing section 21 generates and feeds a capability check request frame to the amplifier section 35 via the set of sections from the modulation and demodulation section 31 to the wireless interface section 34. The amplifier section 35 amplifies a transmission signal corresponding to the capability check request frame fed from the wireless interface section 34, and then wirelessly transmits the amplified signal in the second frequency band through the antenna 24, thus transmitting the request frame to the base station, the unassociated STA, or the slave terminal.

Then, the base station, the unassociated STA, or the slave terminal transmits a capability check response frame indicating the results of checks such as operation checks.

The amplifier section 35 of the communication section 23 receives, through the antenna 24, the response frame, more specifically, a reception signal (packet) corresponding to the response frame and feeds the signal to the control section 22 via the set of sections from the wireless interface section 34 to the data processing section 21.

When the capability check response frame is thus fed to the control section 22, the control section 22 can learn, from the response frame, that construction of the phantom BSS and checks of operations have been performed.

In addition, after a phantom BSS is constructed, the wireless communication apparatus 11 used as the control base station may invite the slave terminal or the unassociated STA connected to the wireless communication apparatus 11 to connect to a predetermined base station. In such a case, for example, the control section 22 determines a base station corresponding to a new connection destination of the slave terminal in accordance with the spatial positional relation between the base station and the slave terminal identified from, for example, the STA information regarding the slave terminal. Similarly, for example, the control section 22 determines a base station corresponding to a connection destination of the unassociated STA in accordance with the spatial positional relation between the base station and the unassociated STA.

When the base station corresponding to the connection destination of the slave terminal or the unassociated STA is determined, the control section 22 controls the data processing section 21 in accordance with the determination result to cause the data processing section 21 to generate a frame inviting connection to the base station and including information related to the base station, such as the identifier of the determined base station.

Under the control of the control section 22, the data processing section 21 generates a frame inviting connection to the base station and feeds the frame to the amplifier section 35 via the set of sections from the modulation and demodulation section 31 to the wireless interface section 34. The amplifier section 35 amplifies a transmission signal corresponding to the frame fed from the wireless interface section 34 and then transmits the amplified signal in the second frequency band through the antenna 24, thus transmitting, to the unassociated STA or the slave terminal, the frame inviting connection to the base station.

Then, the unassociated STA or the slave terminal having received the frame inviting connection to the base station performs appropriate frame exchanges with the base station in accordance with the information included in the received frame and connects to the base station specified by the wireless communication apparatus 11 used as the control base station.

The wireless communication apparatus 11 functioning as the control base station as described above transmits the Master Beacon frame including the identifier of the phantom BSS and performs frame exchanges with the base station or the unassociated STA to construct the phantom BSS. Accordingly, a phantom BSS not predesigned can be autonomously constructed.

### <Description of Connection Processing>

Now, connection processing will be described that is executed by the wireless communication apparatus 11 functioning as the base station or the unassociated STA when the phantom BSS construction processing described with reference to FIG. 8 is executed. Here, with reference to a flowchart in FIG. 9 by way of example, connection processing will be described that corresponds to the sequence described with reference to FIG. 4 and that is executed by the wireless communication apparatus 11 functioning as a base station.

In step S41, the communication section 23 executes processing in step S11 in FIG. 8 to receive, through the antenna 24, the Master Beacon frame transmitted from the control base station.

Specifically, the amplifier section 35 of the communication section 23 receives, through the antenna 24, a reception signal (packet) corresponding to the Master Beacon frame, and feeds the signal to the control section 22 via the set of sections from the wireless interface section 34 to the data processing section 21.

Accordingly, the control section 22 can learn what network the phantom BSS is like and the control base station controlling the phantom BSS, from the identifier of the phantom BSS included in the received Master Beacon frame, the identifier of the control base station, and the operation and function information regarding the phantom BSS.

In the case of determining that the wireless communication apparatus 11 is to connect to the control base station for the phantom BSS, the control section 22 controls frame exchanges performed between the wireless communication apparatus 11 and the control base station for construction of and connection to the phantom BSS1. This causes processing in subsequent step S42 to step S47 to be executed.

Specifically, the control section 22 controls and causes the data processing section 21 to generate a Master Probe Request frame including the identifier of the phantom BSS, for example, in the format indicated by arrow W11 or arrow W12 in FIG. 7. The Master Probe Request frame also includes, as information indicating the source, the identifier of the wireless communication apparatus 11 used as the base station.

Under the control of the control section 22, the data processing section 21 generates a Master Probe Request frame notifying the presence of the wireless communication apparatus 11 and feeds the Master Probe Request frame to the amplifier section 35 via the set of sections from the modulation and demodulation section 31 to the wireless interface section 34.

In step S42, the amplifier section 35 amplifies a transmission signal corresponding to the Master Probe Request frame fed from the wireless interface section 34 and then transmits the amplified signal in the second frequency band through the antenna 24, thus transmitting the Master Probe Request frame to the control base station.

Then, the control base station executes processing in step S13 in FIG. 8 to transmit the Master Probe Response frame.

In step S43, the amplifier section 35 receives the Master Probe Response frame transmitted from the control base station through the antenna 24 and feeds the Master Probe Response frame to the control section 22 via the set of sections from the wireless interface section 34 to the data processing section 21.

When receiving the Master Probe Response frame, the control section 22 controls the data processing section 21 in accordance with the Master Probe Response frame to cause the data processing section 21 to generate a Master Authentication Request frame including the identifier of the phantom BSS, for example, in the format indicated by arrow W11 or arrow W12 in FIG. 7.

Under the control of the control section 22, the data processing section 21 generates a Master Authentication Request frame requesting authentication and feeds the Master Authentication Request frame to the amplifier section 35 via the set of sections from the modulation and demodulation section 31 to the wireless interface section 34.

In step S44, the amplifier section 35 amplifies a transmission signal corresponding to the Master Authentication Request frame fed from the wireless interface section 34 and then transmits the amplified signal in the second frequency band through the antenna 24, thus transmitting the Master Authentication Request frame to the control base station.

Then, the control base station executes processing in step S15 in FIG. 8 to transmit the Master Authentication Response frame, and thus processing in step S45 is executed.

Specifically, in step S45, the amplifier section 35 receives the Master Authentication Response frame transmitted from the control base station through the antenna 24 and feeds the Master Authentication Response frame to the control section 22 via the set of sections from the wireless interface section 34 to the data processing section 21.

When receiving the Master Authentication Response frame, the control section 22 controls the data processing section 21 in accordance with the Master Authentication Response frame to cause the data processing section 21 to generate a Master Association Request frame including the identifier of the phantom BSS, for example, in the format indicated by arrow W11 or arrow W12 in FIG. 7.

Under the control of the control section 22, the data processing section 21 generates a Master Association Request frame requesting connection and feeds the Master Association Request frame to the amplifier section 35 via the set of sections from the modulation and demodulation section 31 to the wireless interface section 34.

In step S46, the amplifier section 35 amplifies a transmission signal corresponding to the Master Association Request frame fed from the wireless interface section 34, and then wirelessly transmits the amplified signal in the second frequency band through the antenna 24, thus transmitting the Master Association Request frame to the control base station.

Additionally, the control base station executes processing in step S17 in FIG. 8 to transmit the Master Association Response frame.

In step S47, the amplifier section 35 receives, through the antenna 24, the Master Association Response frame transmitted from the control base station, and feeds the Master Association Response frame to the control section 22 via the set of sections from the wireless interface section 34 to the data processing section 21. Accordingly, the connection between the control base station and the wireless communication apparatus 11 used as the base station is complete.

Additionally, the control section 22 appropriately feeds the STA information to the data processing section 21 and controls and causes the data processing section 21 to generate an STA info frame including the STA information regarding the slave terminal controlled by the wireless communication apparatus 11. Under the control of the control section 22, the data processing section 21 generates and feeds an STA info frame to the amplifier section 35 via the set of sections from the modulation and demodulation section 31 to the wireless interface section 34.

Note that, as described above, the STA info frame may be generated spontaneously by the wireless communication apparatus 11 used as the base station or in response to a request from the control base station.

In step S48, the amplifier section 35 amplifies a transmission signal corresponding to the STA info frame fed from the wireless interface section 34, and then wirelessly transmits the amplified signal in the second frequency band through the antenna 24, thus transmitting the STA info frame to the control base station.

Additionally, the control section 22 appropriately feeds to the data processing section 21, as control base station information, the information related to the control base station such as the information included in the Master Beacon frame received in step S41 and controls and causes the data processing section 21 to generate a Master AP info frame. Under the control of the control section 22, the data processing section 21 generates a Master AP info frame including the control base station information and feeds the Master AP info frame to the amplifier section 35 via the set of sections from the modulation and demodulation section 31 to the wireless interface section 34.

In step S49, the amplifier section 35 amplifies a transmission signal corresponding to the Master AP info frame fed from the wireless interface section 34 and then wirelessly transmits the amplified signal through the antenna 24, thus transmitting the Master AP info frame to the slave terminal controlled by the wireless communication apparatus 11.

When the wireless communication apparatus 11 used as the base station connects to the control base station and performs frame transmissions to the control base station and the slave terminal to connect the control base station and the slave terminal, the phantom BSS is constructed, and the connection processing ends.

As described above, when receiving the Master Beacon frame including the identifier of the phantom BSS, the wireless communication apparatus 11 functioning as the base station performs frame exchanges with the control base station to connect to the control base station. Additionally, the wireless communication apparatus 11 transmits the STA info frame to the control base station, while transmitting the Master AP info frame to the slave terminal, thus connecting the control base station and the slave terminal. This allows a phantom BSS not predesigned to be autonomously constructed.

Note that, in the above-described example, the phantom BSS is constructed in accordance with the sequence illustrated in FIG. 4 but that, in a case where the phantom BSS is constructed in accordance with the sequence illustrated in FIG. 3, processing in step S41 to step S47 is executed as the connection processing. In this case, not only in the base station but also in the wireless communication apparatus 11 functioning as the unassociated STA or the slave terminal, the processing in step S41 to step S47 is executed as the connection processing.

Additionally, in a case where the phantom BSS is constructed in accordance with the sequence illustrated in FIG. 3 or the sequence illustrated in FIG. 4, the check sequence may be implemented before or after the connection processing or during the connection processing.

In such a case, the control section 22 controls the data processing section 21 or the communication section 23 to control execution of the check sequence.

Specifically, the amplifier section 35 receives, through the antenna 24, the capability check request frame transmitted from the control base station, and feeds the request frame to the control section 22 via the set of sections from the wireless interface section 34 to the data processing section 21.

Then, on the basis of the information related to the phantom BSS, which is included in the request frame, the control section 22 performs a check of whether transmission and reception of signals are enabled or not, a check of communication operations in the phantom BSS, and the like, and controls generation of a capability check response frame indicating check results.

Under the control of the control section 22, the data processing section 21 generates and feeds a capability check response frame to the amplifier section 35 via the set of sections from the modulation and demodulation section 31 to the wireless interface section 34. The amplifier section 35 amplifies a transmission signal corresponding to the response frame fed from the wireless interface section 34, and then wirelessly transmits the amplified signal in the second frequency band through the antenna 24, thus transmitting the response frame to the control base station.

Furthermore, in a case where the wireless communication apparatus 11 functioning as the unassociated STA or the slave terminal executes processing in step S41 to step S47 as the connection processing, the control base station transmits, after construction of the phantom BSS, a frame inviting connection to a specified base station.

In such a case, the control section 22 of the wireless communication apparatus 11 functioning as the unassociated STA or the slave terminal controls the data processing section 21 and the communication section 23 to control connection to the base station specified by the control base station.

Specifically, the amplifier section 35 receives, through the antenna 24, the frame transmitted from the control base station, and feeds the frame to the control section 22 via the set of sections from the wireless interface section 34 to the data processing section 21. Then, on the basis of the information related to the base station specified as the connection destination, which information is included in the received frame, the control section 22 controls execution of frame exchanges and the like for the connection to the base station.

### <Description of BSS Communication Control Processing>

When the phantom BSS is constructed by the above-described processing, the control base station controls communication in each of the BSSs included in the phantom BSS. For example, the control base station controls the communication in the BSS in accordance with the sequence illustrated in FIG. 5.

With reference to a flowchart in FIG. 10, BSS communication control processing will be described that is executed by the wireless communication apparatus 11 functioning as the control base station in a case where the communication in the BSS is controlled in accordance with the sequence illustrated in FIG. 5.

In step S81, the amplifier section 35 receives an SR info frame transmitted from a base station in a predetermined BSS included in the phantom BSS through the antenna 24 and feeds the SR info frame to the control section 22 via the set of sections from the wireless interface section 34 to the data processing section 21.

Here, the description below assumes that the wireless communication apparatus 11 functions as the control base station MAP1 illustrated in FIG. 1 and that, in step S81, the base station AP1 in the BSS1 transmits the SR info frame.

In step S82, the control section 22 generates control information regarding the BSS2, which is different from the BSS1 including the base station AP1.

For example, the control section 22 generates control information on the basis of the SR information included in the SR info frame received from the base station AP1 and information resulting from calculation on the SR information, and feeds the generated information to the data processing section 21.

Additionally, the control section 22 causes the data processing section 21 to generate a frame intended for controlling the communication in the BSS2 and including the control information and the identifier of the phantom BSS1. Under the control of the control section 22, the data processing section 21 generates a frame including the control information and feeds the frame to the amplifier section 35 via the set of sections from the modulation and demodulation section 31 to the wireless interface section 34.

In step S83, the amplifier section 35 amplifies a transmission signal corresponding to the frame including the control information and fed from the wireless interface section 34, and then wirelessly transmits the amplified signal in the second frequency band through the antenna 24, thus transmitting the frame to the base station AP2 or the slave terminal STA2 in the BSS2. When the frame including the control information is transmitted, the BSS communication control processing ends.

The base station AP2 or the slave terminal STA2 having received the frame including the control information performs communication in the BSS2 in accordance with the control information, and thus the communication in the BSS2 is controlled.

As described above, the wireless communication apparatus 11 functioning as the control base station receives the SR info frame from the predetermined BSS, generates control information on the basis of the SR information included in the SR info frame, and transmits a frame including the generated control information to a base station or a slave terminal belonging to another BSS. Accordingly, the control information based on the information related to the communication in the predetermined BSS is used to control the communication in another BSS, enabling more efficient communication.

### <Description of BSS Communication Processing on SR Information Transmission Side>

Additionally, in a case where the BSS communication control processing described with reference to FIG. 10 is executed, a side on which the SR info frame is transmitted executes processing illustrated in FIG. 11.

The BSS communication processing on the SR information transmission side illustrated in FIG. 11 may be executed by the base station or by the slave terminal. Here, the base station AP1 is assumed to execute the BSS communication processing on the SR information transmission side in accordance with the sequence illustrated in FIG. 5.

With reference to a flowchart in FIG. 11, the BSS communication processing on the SR information transmission side will be described that is executed by the wireless communication apparatus 11 functioning as the base station AP1.

When the BSS communication processing on the SR information transmission side is started, first, the control section 22 controls the transmission, to the control base station MAP1, of a frame including the SR information (communication information) related to the communication in the BSS1 to which the wireless communication apparatus 11 belongs.

In other words, in step S111, the data processing section 21 generates an SR info frame including the SR information.

Specifically, the control section 22 generates and feeds SR information to the data processing section 21, and controls and causes the data processing section 21 to generate an SR info frame. Under the control of the control section 22, the data processing section 21 generates an SR info frame including the SR information and feeds the SR info frame to the amplifier section 35 via the set of sections from the modulation and demodulation section 31 to the wireless interface section 34.

In step S112, the amplifier section 35 amplifies a transmission signal corresponding to the SR info frame fed from the wireless interface section 34, and then wirelessly transmits the amplified signal in the second frequency band through the antenna 24, thus transmitting the SR info frame to the control base station MAP1.

In step S113, the data processing section 21 generates a frame including data.

Specifically, the control section 22 controls and causes the data processing section 21 to generate a frame including data to be transmitted to the slave terminal STA1. Under the control of the control section 22, the data processing section 21 generates the frame including data to be transmitted to the slave terminal STA1 and feeds the frame to the amplifier section 35 via the set of sections from the modulation and demodulation section 31 to the wireless interface section 34.

In step S114, the amplifier section 35 amplifies a transmission signal corresponding to the frame including the data and fed from the wireless interface section 34, and then wirelessly transmits the amplified signal in the first frequency band through the antenna 24, thus transmitting the frame to the slave terminal STA1. Additionally, when the frame is received by the slave terminal STA1, the slave terminal STA1 transmits the Ack frame. Thus, the wireless communication apparatus 11 receives the Ack frame, and the communication in the BSS1 ends.

When the frame including the data is thus transmitted to the slave terminal STA1, the BSS communication processing on the SR information transmission side ends.

As described above, the wireless communication apparatus 11 functioning as the base station transmits the SR info frame to the control base station and performs communication in the BSS of the wireless communication apparatus 11. By thus transmitting the SR info frame to the control base station, the control base station can control the communication in another BSS on the basis of the SR information and can perform more efficient communication.

### <Description of BSS Communication Processing on Control Information Reception Side>

Additionally, in a case where the BSS communication control processing described with respect to FIG. 10, a side on which the frame including the control information is received executes processing illustrated in FIG. 12.

The BSS communication processing on the control information reception side illustrated in FIG. 12 may be executed by the base station or by the slave terminal. Here, the base station AP2 is assumed to execute the BSS communication processing on the control information reception side in accordance with the sequence illustrated in FIG. 5.

With reference to a flowchart in FIG. 12, the BSS communication processing on the control information reception side will be described that is executed by the wireless communication apparatus 11 functioning as the base station AP2.

In step S141, the amplifier section 35 receives the frame including the control information and transmitted from the control base station MAP1 through the antenna 24 and feeds the frame to the control section 22 via the set of sections from the wireless interface section 34 to the data processing section 21.

When receiving the frame including the control information as described above, the control section 22 executes processing in the subsequent step S142 to step S144 on the basis of the control information to control the communication in the BSS2 to which the wireless communication apparatus 11 belongs.

Specifically, in step S142, the control section 22 also appropriately executes calculation based on the control information included in the frame received in step S141 to determine information related to the communication in the BSS2 to which the wireless communication apparatus 11 belongs.

For example, the control section 22 determines, as information related to the communication in the BSS2, the time schedule, frequency resources or spatial resources, transmission power, modulation and coding scheme, allowed interference intensity, priority, communication type, and the like for the communication in the BSS2.

When determining the information related to the communication in the BSS2, the control section 22 controls the communication in the BSS2 in accordance with determination results.

Specifically, on the basis of the information determined in step S142, processing in the subsequent step S143 and step S144 is executed, and the BSS communication processing on the control information reception side ends. Note that the processing in step S143 and step S144 is similar to the processing in step S113 and step S114 in FIG. 11 except that the destination of the transmitted frame is the slave terminal STA2 instead of the slave terminal STA1 and thus that description of the processing is omitted.

However, in step S144, for example, the control section 22 controls the operations of the sections in accordance with the time schedule determined in step S142 or such that frames are transmitted using the frequency resources or spatial resources, transmission power, modulation and coding scheme, communication type, and the like determined in step S142.

As described above, the wireless communication apparatus 11 functioning as the base station determines the information related to the communication in the BSS2 in accordance with the control information included in the frame received from the control base station MAP and controls the communication in the BSS2 on the basis of determination results. By thus determining the information related to the communication in the BSS2 in accordance with the control information, the communication in the BSS of the wireless communication apparatus 11 can be more efficiently performed with the communication in another BSS taken into account.

### <Description of BSS Communication Control Processing>

Incidentally, in the BSS communication control processing described with reference to FIG. 10, the case in which the control base station receives the SR info frame from the base station to generate control information is described. However, the control base station may generate control information on the basis of information that the control base station can acquire regarding the communication in the BSS without transfer of the SR info frame.

In such a case, the wireless communication apparatus 11 functioning as the control base station executes, for example, the BSS communication control processing illustrated in FIG. 13. That is, with reference to a flowchart in FIG. 13 , BSS communication control processing will be described that is executed by the wireless communication apparatus 11 functioning as the control base station. In particular, it is assumed here that the wireless communication apparatus 11 functions as the control base station MAP1 illustrated in FIG. 1 and that the BSS communication control processing is executed in accordance with the sequence described with reference to FIG. 6.

In step S171, the communication section 23 detects a frame transmitted in the first frequency band by the base station AP1, that is, the frame transmitted in the BSS1.

For example, when detecting the frame transmitted in the BSS1, the amplifier section 35 of the communication section 23 receives the frame through the antenna 24 and feeds the frame to the control section 22 via the set of sections from the wireless interface section 34 to the data processing section 21. The control section 22 acquires, from the thus received frame, information related to the communication in the BSS1 such as at least a part of the SR information.

Additionally, the control section 22 acquires information related to the communication in the BSS1, such as reception power, which is observed during reception of the frame transmitted by the base station AP1 from the sections of the communication section 23.

In step S172, the control section 22 generates control information for the BSS2, which is different from the BSS1 in which communication has been detected.

For example, the control section 22 generates control information on the basis of the information related to the communication in the BSS1, obtained in step S171, and information resulting from calculation executed on the above-described information and feeds the control information to the data processing section 21.

Once the control information is generated, processing in step S173 is executed to end the BSS communication control processing. However, the processing in step S173 is similar to the processing in step S83 in FIG. 10 and thus description of the processing is ended.

As described above, the wireless communication apparatus 11 functioning as the control base station detects a frame transmitted in the BSS, generates control information, and transmits a frame including the generated control information, in the second frequency band to a base station or a slave terminal belonging to another BSS. Accordingly, the control information based on the information related to the communication in the predetermined BSS is used to control the communication in another BSS, enabling more efficient communication.

Note that, also in the case where the BSS communication control processing described with reference to FIG. 13 is executed, the base station AP2 in the BSS2 executes the BSS communication processing on the control information reception side described with reference to FIG. 12.

### <Configuration Example of Computer>

Incidentally, the above-described series of steps of processing can be executed by hardware or by software. In a case where the series of steps of processing is executed by software, a program included in the software is installed in a computer. Here, the computer includes a computer integrated in dedicated hardware and, for example, a general-purpose personal computer that can execute various functions by using various programs installed in the computer.

FIG. 14 is a block diagram illustrating a configuration example of hardware of a computer executing the above-described series of steps of processing on the basis of programs.

In the computer, a CPU (Central Processing Unit) 501, a ROM (Read Only Memory) 502, a RAM (Random Access Memory) 503 are connected together by a bus 504.

The bus 504 further connects to an I/O (Input/Output) interface 505. The I/O interface 505 connects to an input section 506, an output section 507, a recording section 508, a communication section 509, and a drive 510.

The input section 506 includes a keyboard, a mouse, a microphone, an image capturing element, or the like. The output section 507 includes a display, a speaker, or the like. The recording section 508 includes a hard disk or a nonvolatile memory. The communication section 509 includes an antenna, a network interface, or the like. The drive 510 drives a removable recording medium 511 such as a magnetic disk, an optical disc, a magnetooptical disc, or a semiconductor memory.

In the computer configured as described above, the above-described series of steps of processing is executed by the CPU 501, for example, loading a program recorded in the recording section 508 into the RAM 503 via the I/O interface 505 and the bus 504.

The program executed by the computer (CPU 501) can be provided by, for example, being recorded in the removable recording medium 511 used as a package medium. Additionally, the program can be provided via a wired or wireless transmission medium such as a local area network, the Internet, or a digital satellite broadcasting.

In the computer, the program can be installed in the recording section 508 via the I/O interface 505 by mounting the removable recording medium 511 in the drive 510. Additionally, the program can be received by the communication section 509 via a wired or wireless transmission medium and installed in the recording section 508. Alternatively, the program can be installed in the ROM 502 or the recording section 508 in advance.

Note that the program executed by the computer may be a program in which processing is executed chronologically along the order described herein or in parallel or at required timings when, for example, the program is invoked.

Additionally, the embodiments of the present technique are not limited to the above-described embodiments, but various changes may be made to the embodiments without departing from the spirits of the present technique.

For example, the present technique may be configured as cloud computing in which one function is shared among a plurality of apparatuses via a network and jointly processed.

Additionally, the steps described in the above-described flowcharts can not only be executed by one apparatus but also be shared among a plurality of apparatuses for execution.

Furthermore, in a case where one step includes a plurality of operations of processing, the plurality of operations of processing included in the one step can not only be executed by one apparatus but also be shared among a plurality of apparatuses for execution.

Furthermore, the present technique can be configured as follows.
(1) A wireless communication apparatus that controls a second network including a plurality of first networks,
   each of the first networks including an access point and one or more wireless communication terminals, the wireless communication apparatus including:
   a control section configured to generate, on the basis of communication information related to communication in a predetermined one of the first networks, control information for controlling communication in another of the first networks; and
   a communication section configured to transmit a frame including the control information and an identifier indicating that the frame has been transmitted from the second network controlled by the wireless communication apparatus.
(2) The wireless communication apparatus according to (1), in which the communication section receives a frame including the communication information transmitted by the access point or one of the wireless communication terminals in the predetermined one of the first networks.
(3) The wireless communication apparatus according to (1) or (2), in which the communication information includes information for space reclamation.
(4) The wireless communication apparatus according to any one of (1) to (3), in which the communication information includes at least one of pieces of information including a time schedule, a frequency resource, a spatial resource, transmission power, a modulation and coding scheme, an allowed interference intensity, a frame priority, buffer information regarding the access point or the wireless communication terminals, a communication type, the number of the wireless communication terminals, or positions of the wireless communication terminals in the first network.
(5) The wireless communication apparatus according to any one of (1) to (4), in which the communication section transmits a beacon frame of the second network including the identifier.
(6) The wireless communication apparatus according to (5), in which the beacon frame is transmitted at a frequency lower than a frequency at which a beacon frame of the first network is transmitted.
(7) The wireless communication apparatus according to any one of (1) to (6), in which the control section controls frame exchanges with the access point for construction of the second network and connection to the second network.
(8) The wireless communication apparatus according to (7), in which the control section controls the frame exchanges with the wireless communication terminals.
(9) The wireless communication apparatus according to (7), in which the communication section receives a frame including information related to the wireless communication terminals controlled by the access point for establishment of connection to the wireless communication terminals, the frame being transmitted from the access point.
(10) The wireless communication apparatus according to any one of (1) to (9), in which the communication section transmits, to one of the wireless communication terminals, a frame inviting connection to another access point different from the access point to which the wireless communication terminal is connected.
(11) The wireless communication apparatus according to any one of (1) to (10), in which the control section controls frame exchanges with a wireless communication terminal not belonging to the first network, the frame exchanges being intended for construction of the second network and connection to the second network.
(12) The wireless communication apparatus according to (11), in which the communication section transmits a frame inviting connection to a predetermined access point to the wireless communication terminal not belonging to the first network.
(13) The wireless communication apparatus according to any one of (1) to (12), in which a frame transmitted in the second network includes the identifier indicating that the frame has been transmitted from the second network controlled by the wireless communication apparatus.
(14) The wireless communication apparatus according to (13), in which the identifier is included in a physical header of the frame.
(15) The wireless communication apparatus according to (13), in which a value of the identifier varies with the second network.
(16) The wireless communication apparatus according to any one of (13) to (15), in which the value of the identifier is identical to a value of an identifier of the first network to which the access point or the wireless communication terminal corresponding to a destination of the frame belongs.
(17) The wireless communication apparatus according to any one of (13) to (15), in which the value of the identifier includes one of values assigned to the first networks, the value being not used in the first network.
(18) The wireless communication apparatus according to any one of (1) to (17), in which communication in the second network is performed at a frequency different from a frequency for communication in the first network.
(19) The wireless communication apparatus according to (18), in which the frequency is lower than the frequency used for the communication in the first network.
(20) The wireless communication apparatus according to any one of (1) to (19), in which the control section controls execution of a check sequence with the access point or the wireless communication terminals for checking construction of the second network, transmission and reception of signals from the second network, and whether operation of the second network is supported.
(21) A wireless communication method including:
   by a wireless communication apparatus that controls a second network including a plurality of first networks,
   on the basis of communication information related to communication in a predetermined one of the first networks, generating control information for controlling communication in another of the first networks; and
   transmitting a frame including the control information and an identifier indicating that the frame has been transmitted from the second network controlled by the wireless communication apparatus,
   in which each of the first networks includes an access point and one or more wireless communication terminals.
(22) A wireless communication apparatus belonging to a first network including an access point and one or more wireless communication terminals, the wireless communication apparatus including:
   a control section configured to
   control transmission of a frame including communication information related to communication in the first network to which the wireless communication apparatus belongs, to a master access point that controls a second network including a plurality of the first networks, or
   control communication in the first network on the basis of control information included in a frame received from the master access point, the control information being generated on the basis of the communication information in another of the first networks different from the first network to which the wireless communication apparatus belongs.
(23) The wireless communication apparatus according to (22), further including:
   a communication section configured to transmit a frame including the communication information related to communication in the first network to which the wireless communication apparatus belongs.
(24) The wireless communication apparatus according to (23), in which the communication information includes information for space reclamation.
(25) The wireless communication apparatus according to (23) or (24), in which the communication information includes at least one of pieces of information including a time schedule, a frequency resource, a spatial resource, transmission power, a modulation and coding scheme, an allowed interference intensity, a frame priority, buffer information regarding the access point or the wireless communication terminals, a communication type, the number of the wireless communication terminals, or positions of the wireless communication terminals in the first network.
(26) The wireless communication apparatus according to any one of (23) to (25), in which the communication section receives a beacon frame of the second network, controlled by the master access point, including an identifier indicating that the beacon frame has been transmitted from the second network.
(27) The wireless communication apparatus according to any one of (23) to (26), in which the control section controls frame exchanges with the master access point for construction of the second network and connection to the second network.
(28) The wireless communication apparatus according to (27), in which the wireless communication apparatus includes the access point or one of the wireless communication terminals.
(29) The wireless communication apparatus according to (27), in which the wireless communication apparatus includes the access point, and
   the communication section transmits, for one of the wireless communication terminals controlled by the wireless communication apparatus, a frame to the master access point, the frame including information related to the wireless communication terminal for establishment of connection between the master access point and the wireless communication terminal.
(30) The wireless communication apparatus according to (29), in which the communication section transmits a frame including information related to the master access point, to the wireless communication terminal controlled by the wireless communication apparatus.
(31) The wireless communication apparatus according to any one of (23) to (26), in which the wireless communication apparatus includes one of the wireless communication terminals, and
   the communication section receives a frame including information related to the master access point for establishment of connection to the master access point, the frame having been transmitted from the access point of the first network to which the wireless communication apparatus belongs.
(32) The wireless communication apparatus according to any one of (23) to (27), in which the wireless communication apparatus includes one of the wireless communication terminals, and
   in a case where the wireless communication apparatus receives a frame inviting connection to another access point different from the access point of the first network to which the wireless communication apparatus belongs, the frame being transmitted from the master access point, the control section controls connection to the other access point.
(33) The wireless communication apparatus according to any one of (22) to (30), in which the control section controls execution of a check sequence with the master access point for checking construction of the second network, transmission and reception of signals from the second network, and whether operation of the second network is supported.
(34) The wireless communication apparatus according to any one of (22) to (33), in which a frame transmitted in the second network includes an identifier indicating that the frame has been transmitted from the second network controlled by the master access point.
(35) The wireless communication apparatus according to any one of (22) to (34), in which communication in the second network is performed at a frequency different from a frequency for communication in the first network.
(36) The wireless communication apparatus according to (35), in which the frequency is lower than the frequency used for the communication in the first network.
(37) A wireless communication method including:
   by a wireless communication apparatus belonging to a first network including an access point and one or more wireless communication terminals,
   controlling transmission of a frame including communication information related to communication in the first network to which the wireless communication apparatus belongs, to a master access point that controls a second network including a plurality of the first networks, or
   controlling communication in the first network on the basis of control information included in a frame received from the master access point, the control information being generated on the basis of the communication information in another of the first networks different from the first network to which the wireless communication apparatus belongs.

### [Reference Signs List]

- 11: Wireless communication apparatus
- 21: Data processing section
- 22: Control section
- 23: Communication section
- 35-1 to 35-N, 35: Amplifier section

## Claims

1. A wireless communication apparatus that controls a second network including a plurality of first networks,
each of the first networks including an access point and one or more wireless communication terminals, the wireless communication apparatus comprising:
a control section configured to generate, on a basis of communication information related to communication in a predetermined one of the first networks, control information for controlling communication in another of the first networks; and
a communication section configured to transmit a frame including the control information and an identifier indicating that the frame has been transmitted from the second network controlled by the wireless communication apparatus.

2. The wireless communication apparatus according to claim 1, wherein the communication section receives a frame including the communication information transmitted by the access point or one of the wireless communication terminals in the predetermined one of the first networks.

3. The wireless communication apparatus according to claim 1, wherein the communication information includes at least one of pieces of information including a time schedule, a frequency resource, a spatial resource, transmission power, a modulation and coding scheme, an allowed interference intensity, a frame priority, buffer information regarding the access point or the wireless communication terminals, a communication type, the number of the wireless communication terminals, or positions of the wireless communication terminals in the first network.

4. The wireless communication apparatus according to claim 1, wherein the communication section transmits a beacon frame of the second network including the identifier.

5. The wireless communication apparatus according to claim 1, wherein the control section controls frame exchanges with the access point for construction of the second network and connection to the second network.

6. The wireless communication apparatus according to claim 1, wherein the communication section transmits, to one of the wireless communication terminals, a frame inviting connection to another access point different from the access point to which the wireless communication terminal is connected.

7. The wireless communication apparatus according to claim 1, wherein the control section controls frame exchanges with a wireless communication terminal not belonging to the first network, the frame exchanges being intended for construction of the second network and connection to the second network.

8. The wireless communication apparatus according to claim 1, wherein a frame transmitted in the second network includes the identifier indicating that the frame has been transmitted from the second network controlled by the wireless communication apparatus.

9. The wireless communication apparatus according to claim 8, wherein the identifier is included in a physical header of the frame.

10. The wireless communication apparatus according to claim 1, wherein communication in the second network is performed at a frequency different from a frequency for communication in the first network.

11. The wireless communication apparatus according to claim 1, wherein the control section controls execution of a check sequence with the access point or the wireless communication terminals for checking construction of the second network, transmission and reception of signals from the second network, and whether operation of the second network is supported.

12. A wireless communication method comprising:
by a wireless communication apparatus that controls a second network including a plurality of first networks,
on a basis of communication information related to communication in a predetermined one of the first networks, generating control information for controlling communication in another of the first networks; and
transmitting a frame including the control information and an identifier indicating that the frame has been transmitted from the second network controlled by the wireless communication apparatus,
wherein each of the first networks includes an access point and one or more wireless communication terminals.

13. A wireless communication apparatus belonging to a first network including an access point and one or more wireless communication terminals, the wireless communication apparatus comprising:
a control section configured to
control transmission of a frame including communication information related to communication in the first network to which the wireless communication apparatus belongs, to a master access point that controls a second network including a plurality of the first networks, or
control communication in the first network on a basis of control information included in a frame received from the master access point, the control information being generated on a basis of the communication information in another of the first networks different from the first network to which the wireless communication apparatus belongs.

14. The wireless communication apparatus according to claim 13, further comprising:
a communication section configured to transmit a frame including the communication information related to communication in the first network to which the wireless communication apparatus belongs.

15. The wireless communication apparatus according to claim 14, wherein the communication information includes at least one of pieces of information including a time schedule, a frequency resource, a spatial resource, transmission power, a modulation and coding scheme, an allowed interference intensity, a frame priority, buffer information regarding the access point or the wireless communication terminals, a communication type, the number of the wireless communication terminals, or positions of the wireless communication terminals in the first network.

16. The wireless communication apparatus according to claim 14, wherein the control section controls frame exchanges with the master access point for construction of the second network and connection to the second network.

17. The wireless communication apparatus according to claim 14, wherein the wireless communication apparatus includes one of the wireless communication terminals, and
in a case where the wireless communication apparatus receives a frame inviting connection to another access point different from the access point of the first network to which the wireless communication apparatus belongs, the frame being transmitted from the master access point, the control section controls connection to the other access point.

18. The wireless communication apparatus according to claim 13, wherein the control section controls execution of a check sequence with the master access point for checking construction of the second network, transmission and reception of signals from the second network, and whether operation of the second network is supported.

19. The wireless communication apparatus according to claim 13, wherein a frame transmitted in the second network includes an identifier indicating that the frame has been transmitted from the second network controlled by the master access point.

20. A wireless communication method comprising:
by a wireless communication apparatus belonging to a first network including an access point and one or more wireless communication terminals,
controlling transmission of a frame including communication information related to communication in the first network to which the wireless communication apparatus belongs, to a master access point that controls a second network including a plurality of the first networks, or
controlling communication in the first network on a basis of control information included in a frame received from the master access point, the control information being generated on a basis of the communication information in another of the first networks different from the first network to which the wireless communication apparatus belongs.
